# EUROPEAN PATENT APPLICATION

(11) **EP 2 096 854 A1**
(43) Date of publication of application: **02.09.2009**
(21) Application number: 09153954.4
(22) Date of filing: 27.02.2009
(51) Int. Cl.: H04N 1/00, H04N 1/04

(54) **Image reading apparatus and image reading system capable of reading parts of an original with different read settings without repeated scanning**

(30) Priority: 29.02.2008 JP 2008050501
(71) Applicant: Oki Data Corporation, Tokyo 108-8551 (JP)
(72) Inventor: Ito, Toshiyuki, Tokyo 108-8551 (JP)
(74) Representative: Pisani, Diana Jean

(57) **Abstract**

An image forming apparatus and an image forming system are supplied capable of performing a read process based on different read conditions with respect to read ranges without repeatedly scanning a manuscript. In the image reading apparatus for reading an image from a medium, an inputting section inputs respective range information for designating plural read ranges with respect to the medium, and inputs condition designation information for designating read conditions corresponding to read ranges; a storing section stores the range information and the input condition designation information; a reading section that reads image of the read range from the medium on the basis of the range information and the condition designation information, while physically moving position of itself with respect to the medium; and a controlling section controls the reading section to execute operation, the range information and the condition designation information, and executes image reading.

## Description

### FIELD OF THE INVENTION

The invention relates to an image reading apparatus that scans medium and reads image of read range, and relates to an image reading system comprising the image reading apparatus; especially, relates to an image reading apparatus and an image reading system that can read image of plural read range by scanning once.

### BACKGROUND OF THE INVENTION

In recent years, scanner is popularized as an image reading apparatus and is widely used as a peripheral apparatus of personal computer (PC).

If an image reading system which comprises an upper apparatus such as PC and an image reading apparatus, the upper apparatus sets a read range for performing reading process and sets read condition such as resolution, color mode and the like on the basis of designation of user. Then, the image reading apparatus scans manuscript of reading object and performs reading process with respect to the read range on the basis of the read condition which is set, and then obtains an image. The obtained image is input to the upper apparatus and is stored in the upper apparatus. User can use the image reading system to read out image of desired articles from manuscript such as newspaper and magazines and the like, and to store the image.

On the one hand, in this kind of image reading system, in the case to read out images of plural read ranges from a sheet of manuscript and store the image, the image reading apparatus must repeat the scan of whole manuscript with respect to each read range designated, so there is a problem that it is necessary to spend time.

On the other hand, in a patent document 1 mentioned below, in order to reduce resolution of scanner itself, such technology of scan method is disclosed to set a read range with performing selection and a read range without performing selection; through reading image of regions of plural read ranges with performing selection but not reading the read range without performing selection in once scan, to reduce resolution and increase speed.
Patent document 1: Japan patent publication of No. Hei2000-307815

However, when the technology stated in patent document 1 is used, because setting of the scanner itself is changed, a reading section of the scanner becomes to read all images to be outputted in a same setting. Therefore, in the conventional technology, different read condition could not be designated with respect to the plural read ranges that are read respectively by the reading section of the scanner whose position with manuscript is changed in once scan.

Therefore, an image reading apparatus and an image reading system are desirable that can perform a reading process on the basis of different read condition with respect to each read range, even if moving bacc and forth the reading section several times with respect to the manuscript so as to change the position of the reading section.

### SUMMARY OF THE INVENTION

It is, therefore, an object of the invention to provide an image forming apparatus and an image forming system that can solve the above problem.

A first aspect of the invention is to provide an image reading apparatus for reading an image from medium, the image reading apparatus comprises an inputting section that inputs respective range information for designating plural read ranges with respect to the medium, and inputs designation condition information for designating read conditions corresponding to respective read ranges; a storing section that stores the input range information and the input designation condition information; a reading section that reads image of the read range from the medium on the basis of the range information and the designation condition information, while physically moving position of itself with respect to the medium; and a controlling section that reads out the range information and the designation condition information that correspond to respective read ranges from the storing section, instructs the reading section to physically move position with respect to the medium, sets the reading section on the basis of position information with respect to the medium about the reading section, the range information and the designation condition information, and executes a read of image of the read range.

A second aspect of the invention is to provide an image reading system which comprises an upper apparatus; and an image reading apparatus which is connected with the upper apparatus and is used for reading image from medium, wherein the upper apparatus includes an inputting section that inputs respective range information for designating plural read ranges with respect to the medium, and inputs designation condition information for designating read conditions corresponding to respective read ranges; and an upper sending section that sends the range information and the designation condition information that are input to the image reading apparatus, wherein the image reading apparatus includes a receiving section that receives the range information and the designation condition information from the upper apparatus; a storing section that stores the received range information and the received designation condition information; a reading section that reads image of the read range from the medium on the basis of the range information and the designation condition information, while physically moving position of itself with respect to the medium; and a controlling section that reads out the range information and the designation condition information that correspond to respective read ranges from the storing section, instructs the reading section to physically move position with respect to the medium, sets the reading section of the basis of position information with respect to the medium about the reading section, the range information and the designation condition information, and executes a read of image of the read range.

### The effect of the present invention:

According to the image reading apparatus and the image reading system of the present invention; read conditions are set respectively with respect to respective read ranges; and a read order of respective read ranges is designated; according to the read order, reading process of image of read range is performed on the basis of the read condition which is set. Therefore, even though scan of the medium is not repeated, because it is possible to read images of plural read ranges respectively on the basis of desired read conditions, so efficient reading process can be realized.

The above and other objects and features of the present invention will become apparent from the following detailed description and the appended claims with reference to the accompanying drawings.

### BRIEF DSCRIPTION OF THE DRAWINGS

Fig. 1 is a block diagram showing a structure of a scanner system in embodiment 1 of the present invention;
Fig. 2 is a diagram showing a compendium structure of a scanner system of the present invention;
Fig. 3A is a first explanation diagram showing a designation example of read range in manuscript image (I);
Fig. 3B is a first explanation diagram showing a designation example of read range in manuscript image (II);
Fig. 4 is an explanation diagram showing an example of a read condition setting scene;
Fig. 5A is a first explanation diagram showing a structure of a setting storing section in embodiment 1;
Fig. 5B is a second explanation diagram showing a structure of a setting storing section in embodiment 1;
Fig. 6 is a flow chart for explaining pre-scan operation of a scanner of the present invention;
Fig. 7 is a flow chart for explaining read range designation operation of host PC;
Fig. 8 is a first flow chart for explaining setting read operation in embodiment 1 of scanner of the present invention;
Fig. 9 is a second flow chart for explaining setting read operation in embodiment 1 of scanner of the present invention;
Fig. 10 is a block diagram showing a structure of a scanner system in embodiment 2 of the present invention;
Fig. 11A is a second explanation diagram showing a designation example of read range in manuscript image (I);
Fig. 11B is a second explanation diagram showing a designation example of read range in manuscript image (II);
Fig. 12A is a first explanation diagram showing a structure of setting storing section in embodiment 2;
Fig. 12B is a second explanation diagram showing a structure of setting storing section in embodiment 2;
Fig. 12C is a third explanation diagram showing a structure of setting storing section in embodiment 2;
Fig. 13A is a first explanation diagram showing a setting example of prior read range;
Fig. 13B is a second explanation diagram showing a setting example of prior read range;
Fig. 13C is a third explanation diagram showing a setting example of prior read range;
Fig. 14 is a first flow chart for explaining setting operation in embodiment 2 of scanner of the present invention;
Fig. 15 is a second flow chart for explaining setting operation in embodiment 2 of scanner of the present invention;
Fig. 16 is a first flow chart for explaining read operation in embodiment 2 of scanner of the present invention;
Fig. 17 is a second flow chart for explaining read operation in embodiment 2 of scanner of the present invention;
Fig. 18 is a first flow chart for explaining change sending operation in embodiment 2 of scanner of the present invention;
Fig. 19 is a second flow chart for explaining change sending operation an embodiment 2 of scanner of the present invention;
Fig. 20 is a block diagram showing a structure of a scanner system in embodiment 3 of the present invention;
Fig. 21 is a first flow chart for explaining read sending operation in embodiment 3 of scanner of the present invention;
Fig. 22 is a second flow chart for explaining read sending operation in embodiment 3 of scanner of the present invention;
Fig. 23 is a first flow chart for explaining change operation in embodiment 3 of scanner system of the present invention; and
Fig. 24 is a second flow chart for explaining change operation in embodiment 3 of scanner system of the present invention.

### DETAILED DESCRIPTION OF THE PREFERRED EMBODIMENTS

Embodiments of the invention will be described in detail hereinbelow with reference to the drawings.

### <Embodiment 1>

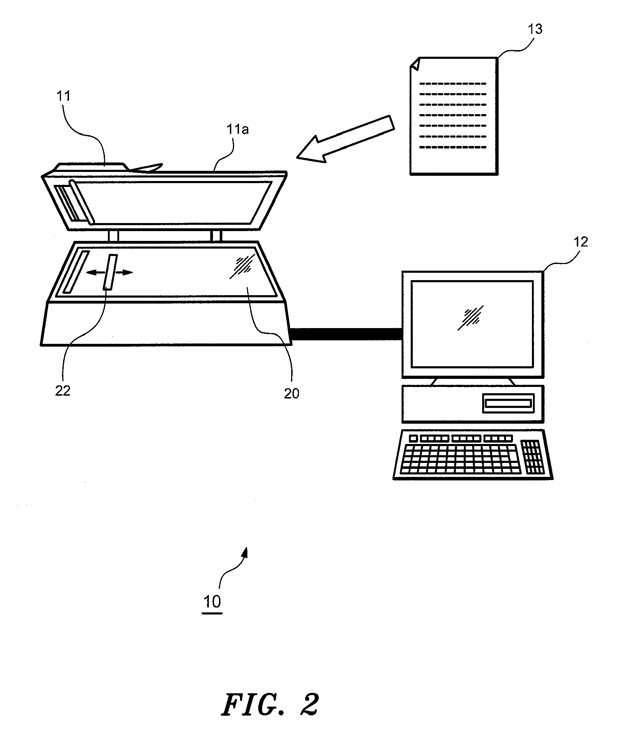

Fig. 2 is a diagram showing a compendium structure of a scanner system of the present invention.

A scanner 11 of the embodiment, as shown by Fig. 2, is connected to host PC 12 so as to form a scanner system 10. Through using the scanner system 10, it is possible to read images of plural read ranges from a manuscript 13 such as newspaper and magazine and the like, and to store these images.

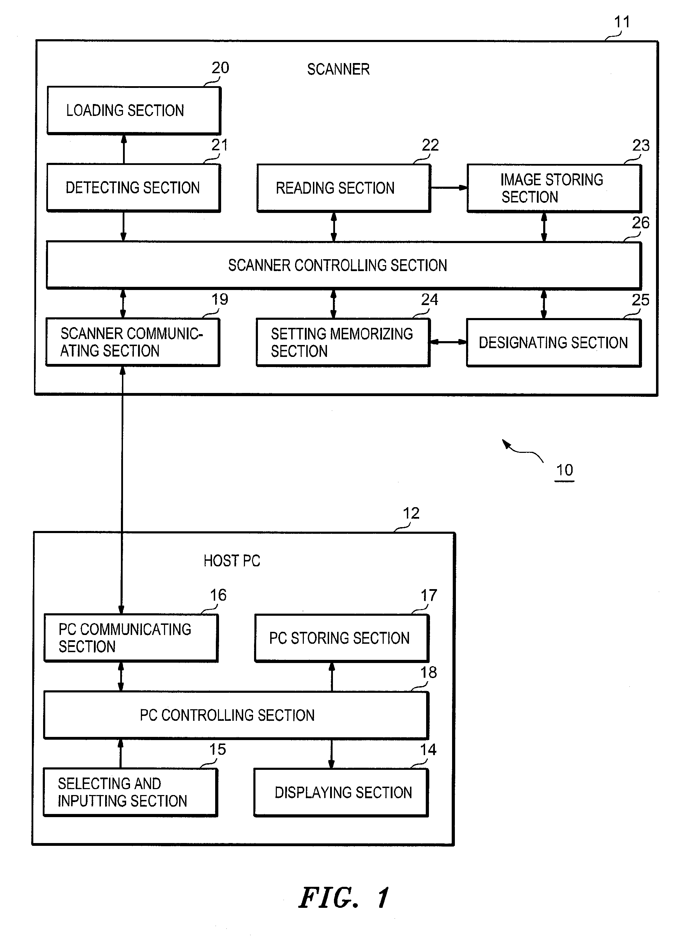

Fig. 1 is a block diagram showing a structure of a scanner system in embodiment 1 of the present invention.

The scanner system 10, as shown by Fig. 1, comprises a scanner 11 as an image reading apparatus and a host PC 12 as an upper apparatus. A connection method between the scanner 11 and the host PC 12 may be any of USB (Universal Serial Bus) connection and parallel connection and the like.

The host PC 12 is formed from a personal computer (PC), as shown by Fig. 1, comprises a displaying section 14, a selecting and inputting section 15, a PC communicating section 16, a PC storing section 17 and a PC controlling section 18.

The displaying section 14 is formed from a displayer in this embodiment, and is used for displaying information.

The selecting and inputting section 15 is composed of a keyboard and a mouse in thas embodiment, and has an inputting function as an inputting section. The selecting and inputting section 15 is used to make user designate or select with respect to information which is displayed on the displaying section 14.

Information displayed on the displaying section 14 is the image, that is, manuscript image which is obtained by pre-scanning, for example, manuscript 13. With respect to the manuscript image, user can designate desired read ranges by operating the selecting and inputting section 15.

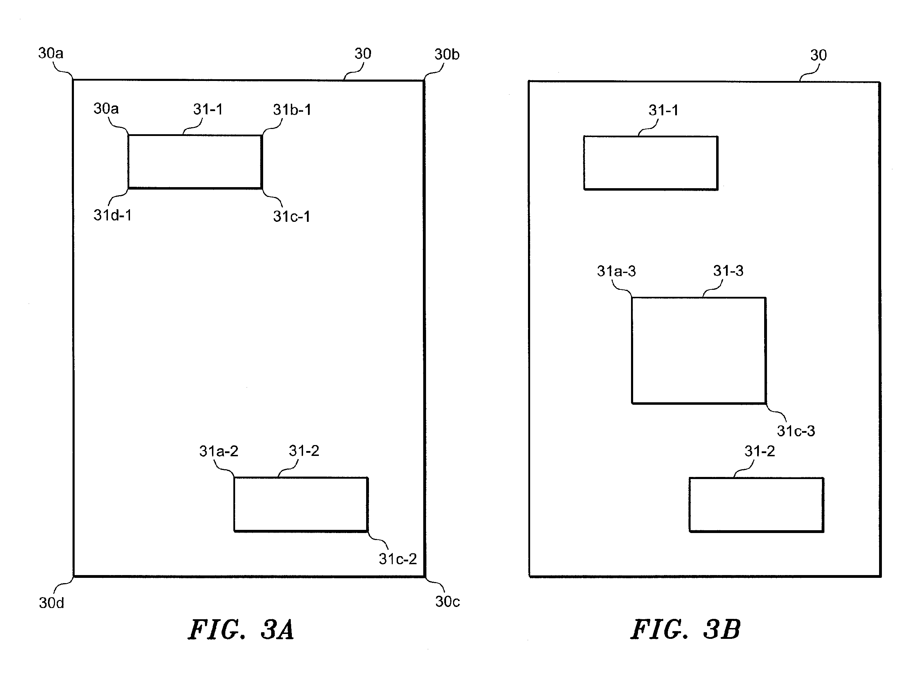

Fig. 3A is a first explanation diagram showing a designation example of read range in manuscript image (I); and Fig. 3B is a first explanation diagram showing a designation example of read range in manuscript image (II).

In this embodiment, the scanner 11, as shown by Fig. 3A and Fig. 3B, obtains a manuscript image 30 of rectangular shape. User can designate plural rectangular regions respectively as read ranges in the manuscript image 30 which is displayed on the displaying section 14, through operating the selecting and inputting section 15. Two rectangular regions 31-1 and 31-2 are shown in Fig. 3A as a designation example of read range in the manuscript image 30.

The selecting and inputting section 15, when rectangular region is designated as a read range in the manuscript image 30 on the basis of user's operation, inputs coordinate values of two top points "a" and "c", i.e. coordinate "a" (xₐ, yₐ) and coordinate "c" (x_{c}, y_{c}) in 4 top points a, b, c, d of rectangular region as range information that represents respective read ranges based on designation, into the PC controlling section 18. In this embodiment, when the coordinate value of top point b, i.e. coordinate "b" (x_{b}, y_{b}) and the coordinate value of top point d, i.e. coordinate "d" (x_{d}, y_{d}) are designated, in order to meet xₐ = x_{d} < x_{b} = x_{c} and yₐ= y_{b} < y_{c}= y_{d}, coordinate "a", coordinate "b", coordinate "c", coordinate "d" are selected.

Moreover, in the manuscript image 30 (Fig. 3A), coordinate value of (x, y) is obtained by regarding top point 30a of the manuscript image 30 as origin, regarding a direction connecting top point 30a with top point 30b as X axis, and regarding a direction connecting top point 30a with top point 30d as Y axis. Moreover, the X axis corresponds to main scan direction in the scanner 11, and the Y axis corresponds to the auxiliary scan direction in the scanner 11.

For example, when the rectangular region 31-1 (Fig. 3A) is designated as a read range, the selecting and inputting section 15 inputs respective coordinate values (xₐ₁, yₐ₁) and (x_{c1}, y_{c1}) of the two top points 31a-1 and 31c-1 in 4 top points of 31a-1, 31b-1, 31c-1 and 31d-1 in the rectangular region 31-1 as coordinate "a" and coordinate "c".

Further, information displayed on the displaying section 14 is read condition information which is composed of designation resolution ifformation and designation color mode information. User can select desired resolution and color mode by operating the selecting and inputting section 15.

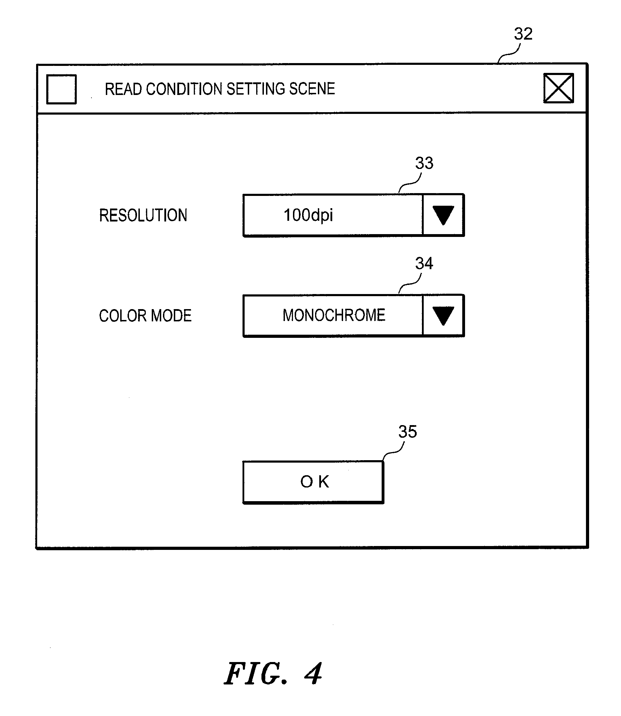

Fig. 4 an explanation diagram showing a structure of a setting storing section in embodiment 1.

The read condition setting scene 32, as shown by Fig. 4, comprises a resolution selecting region 33 which can display a list of resolution that is possible to select and a color mode selection region 34 which can display a list of color mode that is possible to select. Further, in the read condition setting scene 32, an "OK" button 35 is displayed to request a setting of read condition information.

In this embodiment, in the read condition setting scene 32, it is possible to select any resolution of 100dpi (dot/inch), 200dpi, 300dpi, 400dpi, 500dpi and 600dpi. User, through operating the selecting and inputting section 15, selects a desired resolution to display it on the resolution selecting region 33.

Further, in this embodiment, in the read condition setting scene 32, it is possible to select any color mode of monochrome, gray scale and color. User selects a desired resolution to display it on the color mode selection region 34 through operating the selecting and inputting section 15.

In the read condition setting scene 32, after resolution and color mode that correspond to each read range are selected, when the "OK" button 35 is pressed, the selecting and inputting 15 inputs the resolution which is displayed on the resolution selecting region 33 as designation resolution information, and inputs color mode which is displayed on the color mode selecting region 34 as designation color mode information respectively. The designation resolution information and the designation color mode information that are input, are sent to the PC controlling section 18.

For example, in the read condition setting scene 32 as shown by Fig. 4, when the "OK" button 35 is pressed, the selecting and inputting section 15 inputs designation resolution information "100dpi" and designation colgr mode information "monochrome" to the PC controlling section 18.

Furthermore, the selecting and inputting section 15 inputs a read request for requesting the scanner to execute a reading process of image, to the PC controlling section 18.

The PC communicating section 16 has a function of performing a sending and receiving of data with the scanner 11, as an upper sending section and an upper receiving section. The PC communicating section 16 receives image data from the scanner 11 and then sends image data to the PC controlling section 18. Further, the PC communicating section 16 receives the coordinate "a" and the coordinate "c", the designation resolution information and the designation color mode information that correspond to the read range, from the PC controlling section 18, and then sends them to the scanner 11.

The PC storing section 17 stores image data received from the scanner 11 on the basis of control of the PC controlling section 18.

The PC controlling section 18 performs control of respective sections mentioned above.

The scanner 11, as shown by Fig. 1, comprises a scanner communicating section 19, a loading section 20, a detecting section 21, a reading section 22, an image storing section 23, a setting storing section 24, a designating section 25 and a scanner controlling section 26.

The scanner communicating section 19 performs sending and receiving of data with the host PC 12 as a sending section and a receiving section. The scanner communicating section 19 receives the coordinate "a", the coordinate "c", the designation resolution information and the designation color mode information, and then sends them to the scanner controlling section 26. Further, the scanner communicating section 19 receives image data from the scanner controlling section 26, and then sends it to the host PC 12.

The loading section 20, in this embodiment, is formed from plate glass which is placed on the underside of manuscript cover 11a (Fig. 2), and is a load stand on which manuscript 13 of reading object is loaded.

The detecting section 21 is formed from a sensor, detects the manuscript 13 which is loaded on the loading section 20, and sends detection signal representing a detection to the scanner controlling section 26.

The reading section 22 is a read sensor that is formed from LED, CCD or the like, as shown by Fig. 2, is loaded on the underside of the loading section 20 in this embodiment.

The reading section 22 stands still at a predetermined position before a beginning of the reading process; and begins parallel movement from the predetermined position in the direction of auxiliary scan direction as shown by an arrow in the Fig. 2 on the basis of a reading beginning instruction output from the scanner controlling section 26. Along with the parallel movement, the reading section 22 scans the manuscript 13 which is loaded downward on the loading section 20, and reads image of the read range from the manuscript 13 on the basis of coordinate "a", coordinate "c", designation resolution infgrmation and designation color mode information that are designated, through the scanner controlling section 26, with respect to each read range. The image which is read, is changed into image data and is sent to the image storing section 23. When the reading process with respect to respective read ranges is completed, the reading section 22 returns to the predetermined position and then stands still.

Further, the reading section 22, on the basis of pre-scan instruction from the controlling section 26, scans the manuscript 13 according to predetermined pre-scan resolution and pre-scan color mode, and reads the manuscript image 30. In this embodiment, pre-scan resolution "100dpi" and pre-scan color mode "color" are previously set in the reading section 22.

The image storing section 23 is a temporary storing section for storing image data temporarily which is obtained through the reading section 22.

The setting storing section 24, as a storing section, stores the coordinate "a" and the coordinate "c" as range ifformation of respective read ranges, and the designation resolution information and the designation color mode information as read condition information.

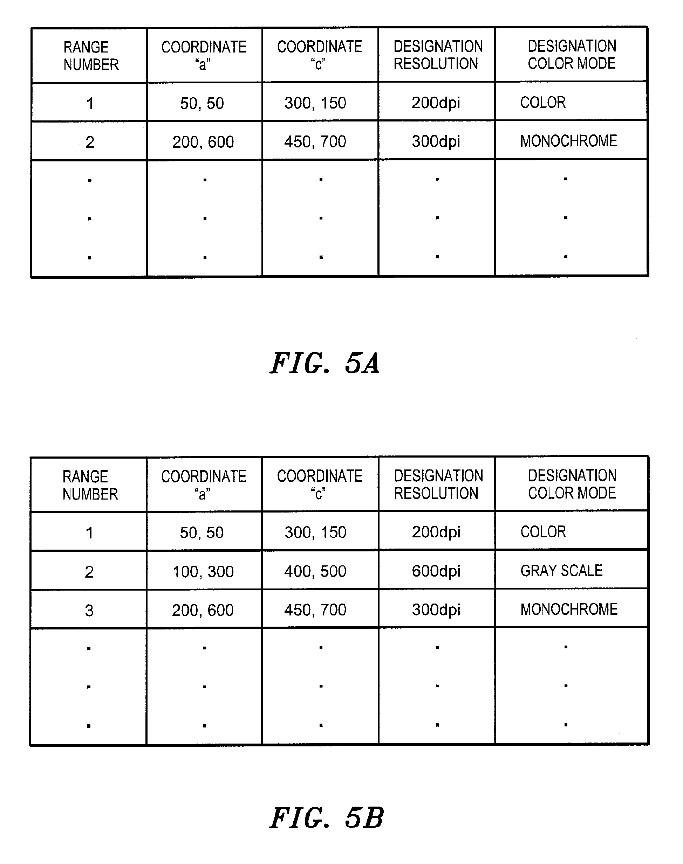

Fig. 5A is a first explanation diagram showing a structure of a setting storing section in embodiment 1; Fig. 5B is a second explanation diagram showing a structure of a setting storing section in embodiment 1.

In the setting storing section 24, as shown by Fig. 5A and Fig. 5B, coordinate "a" item and coordinate "c" item that correspond to range number "i" (i=1,2...) of respective read ranges are set. In respective coordinate items, coordinate "a" (xₐᵢ, yₐᵢ) and coordinate "c" (x_{ci}, y_{ci}) of the corresponding read range are respectively stored. The read range (xᵢ, yᵢ) of range number "i" is designated by the coordinate "a" and the coordinate "c", and becomes (xₐ₁, yₐ₁)≤(xᵢ, yᵢ₎ ≤(x_{c1}, y_{c1)}. The range number "i" of respective read ranges respresents a read order of the read range, and is designated by the designating section 25 mentioned later.

Further, in the setting storing section 24, designation resolution item and designation color mode item that correspond to range number "i" (i=1, 2...) are also set up. In these designation resolution item and designation color mode item, the designation resolution information and the designation color mode information that are set to correspond to respective read ranges are respectively stored.

For example, as shown by Fig. 5A, coordinate "a" (50, 50) and coordinate "c" (300, 150) that correspond to range number "1" are respectively stored in the setting storing section 24. These coordifates, as range information, correspond to the rectangular region 31-1 which is designated as read range in the manuscript image 30 (Fig 3A). Further, corresponding to these, designation resolution information "200dpi" and designation color mode information "color" are also respectively stored in the setting storing section 24.

In addition, as shown by Fig. 5A, coordinate "a" (200, 600) and coordinate "c" (450, 700) that correspond to range number "2" are respectively stored in the setting storing section 24. This corresponds to range information corresponding to the rectangular region 31-2 which is designated as read range in the manuscript image 30 (Fig. 3A). Further, corresponding to these, designation resolution information "300dpi" and designation color mode information "monochrome" are also respectively stored in the setting storing section 24.

The designating section 25 has a function of designating a read order of plural read ranges that are designated with respect to the manuscript image 30. The designating section 25, after received coordinate "a" and coordinate "c" of respective read ranges from the scanner controlling section 26, the designation resolution information and the designation color mode information, reads out the y-coordinate value from the received coordinate "a", and then compares the y-coordinate value with respective y-coordinate values that are stored in coordinate "a" item in the setting storing section 24. Then, a read order is designated according to such order as that y-coordinate value becomes small, and range numbers are given to respective read ranges on the basis of the read order.

For example, it is to consider such a situation that coordinate "a", coordinate "c", designation resolution information and designation color mode information that correspond to read ranges 1,2,..., n-1 are stored in the setting storing section 24. At this time, in the setting storing section 24, respective coordinates "a" (xₐ₁, yₐ₁), (xₐ₂, Yₐ₂), ..., (xₐₙ₋₁, yₐₙ₋₁) that correspond to range number "1", "2", ..., "n-1" are stored. Here, the y-coordinate value included in respective coordinate "a" becomes yₐ₁< yₐ₂<..... yₐₙ₋₁ according to the order of range numbers.

When respective information including coordinate "a" (xₐₙ, yₐₙ) corresponding to read range "n" is received from the scanner controlling section 26, the designating section 25 reads out y-coordinate value "yₐₙ" from the received coordinate "a"; and reads out y-coordinate value "yₐ₁" of coordinate "a" corresponding to range number "1" from the setting storing section 24; then compares these y-coordinate values "yₐₙ" with "yₐ₁", and judges their magnitude. When "yₐₙ" is smaller than "yₐ₁", the designating section 25, adds "1" to range numbers "1", "2", ... "n-1" respectively that are designated with respect to respective read ranges, then changes the range numbers "1", "2", ..., "n-1" into range numbers "2", "3", ..., "n"; and designates the range number of this read range "n" as "1". Then, the designating section 25 makes the setting storing section 24 store the coordinate "a", the coordinate "c", the designation resolution information and the designation color mode information that are received from the scanner controlling section 26 to correspond to the range number "1".

When "yₐ" is bigger than "yₐ₁", the designating section 25, reads out y-coordinate value "yₐ₂" of the coordinate "a" that corresponds to the range number "2", then compares these y-coordinate values "yₐₙ" with "yₐ₂", and judges their magnitude.

When a comparison judgment of y-coordinate values is performed, and then it is judged that "yₐₙ" is smaller than y-coordinate value "yₐ₁" corresponding to range number "i", the designating section 25 adds "1" to range number "i", "i+1", ... "n-1", then changes the range number "i", "i+1", ... "n-1" into range number "i+1", "i+2", ... "n". Then, the designating section 25 designates "i" as the range number of the read range "n", and make the setting storing section 24 memorize the coordinate "a", the coordinate "c", the designation resolution information and the designation color mode information that are received from the scanner controlling section 26 to correspond to the range number "i".

The scanner controlling section 26, as a controlling section, performs control of respective sections above mentioned. The scanner controlling section 26, after received detection signal from the detecting section 21, sends pre-scan instruction to the reading section 22. Further, the scanner controlling section 26, after received reading request from the host PC 12, sends reading beginning instruction to the reading section 22 to execute reading process from respective read ranges.

Continuously, it is to explain operation of the scanner system 10 in this embodiment.

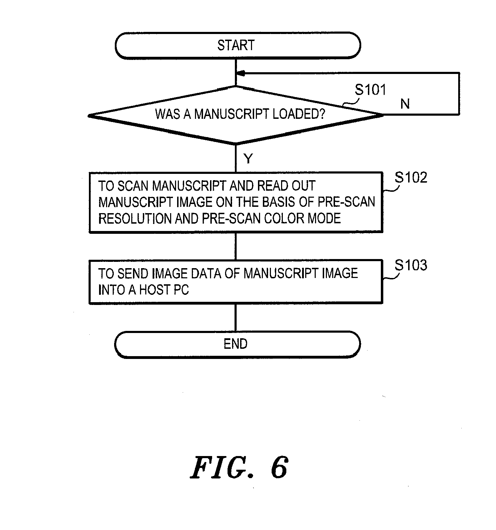

Firstly, it is to explain about a flow of processing pre-scanning the manuscript 13 in the scanner 11 as shown by Fig 6.

Fig. 6 is a flow chart for explaining pre-scan operation of a scanner of the present invention.

When user loads the manuscript 13 on the loading section 20 of the scanner 11, the detecting sectign 21 detects the manuscript 13 and sends the detection signal to the scanner controlling section 26 (step S101) .

The scanner controlling section 26, when receiving the detection signal, should obtain manuscript image 30 of the manuscript 13, sends pre-scan instruction to the reading section 22. When pre-scan instruction is received, the reading section 22, scans the manuscript 13 based on predetermined pre-scan resolution and pre-scan color mode, and then reads the manuscript 30(step S102). In this embodiment, the reading section 22 performs the read of the manuscript image 30 on the basis of the pre-scan resolution "100dpi" and the pre-scan color mode "color". The image data of the manuscript image 30 is sent and stored into the image storing section 23.

The scanner controlling section 26, continuously, reads out the image data of the manuscript image 30 from the image storing section 23, and then sends the image data to the scanner communicating section 19. Then, the scanner communicating sectign 19 sends the image data to the host PC 12(step S103). By this, the pre-scan processing in the scanner 11 is completed.

As above stated, after the manuscript 13 is loaded on the loading section 20 in the scanner 11, the image of the manuscript 13 is read, and the image data is sent to the host PC 12.

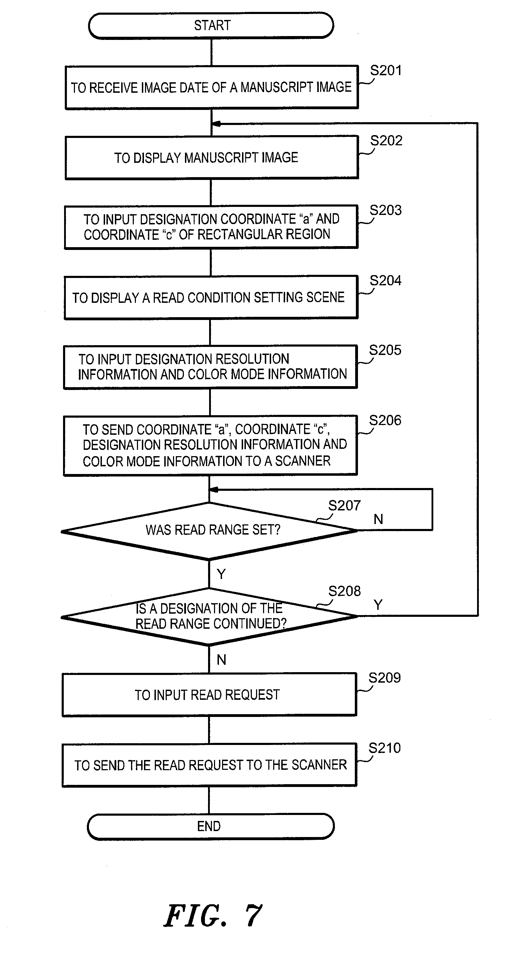

Next, it is to explain a flow of processing when plural read ranges are designated in the host PC 12 as shown by Fig 7.

Fig. 7 is a flow chart for explaining read range designation operation of host PC.

Here, as shown by Fig 3B, it performs to explain an example in the case that 3 rectangular regions 31-1, 31-2, 31-3 are designated in order as read range in the manuscript image 30.

In the host PC 12, when the PC communicating section 16 receives image data of the manuscript image 30 from the scanner 11(step S201), the PC controlling section 18 controls the displaying section 14 to execute a display of the manuscript image 30 based on the image data (step S202).

User operates the selecting and inputting section 15 and performs a designation of the read range in the manuscript image 30 displayed on the displaying section 14. Firstly, as shown by Fig 3A, when the rectangular region 31-1 is designated as read range, the selecting and inputting section 15 obtains coordinate value of two top points 31a-1 and 31c-1 of the rectangular region 31-1, that is, coordinate "a" (xₐ, yₐ₎ and coordinate "c" (x_{c}, y_{c)}, and then respectively inputs them to the PC controlling section 18 (step S203). Here, the selecting and inputting section 15 inputs coordinate "a" (50, 50) and coordinate "c" (300, 150).

After this input is received, the PC controlling section 18 controls the displaying section 14 to display the read condition setting scene 32(Fig. 4) (step S204).

In the read condition setting scene 32 (Fig. 4), user operates the selecting and inputting section 15 and after desired resolution is displayed on the resolution selecting region 33 and desired color mode is displayed on the color mode selecting region 34, when the "OK" button 35 is pressed, the selecting and inputting section 15 inputs the resolution displayed on the resolution selecting region 33 as designation resolution information and the color mode displayed on the color mode selecting region 34 as designation color mode information to the PC controlling section 18 respectively (step S205). Here, the selecting and inputting section 15 inputs the designation resolution information "200dpi" and the designation color mode information "color" to the PC controlling section 18.

Continuously, the PC controlling section 18 sends the coordinate "a", the coordinate "c", the designation resolution information and the designation color mode information that are input to the scanner 11 through the PC communicating section 16 (step S206). The PC communicating section 16 sends coordinate "a" (50, 50), coordinate "c" (300, 150), designation resolution information "200dpi" and designation color mode information "color" to the scanner 11.

In the scanner 11, when coordinate "a", coordinate "c", the designation resolution information and the designation color mode information that correspond to the rectangular region 31-1 are received, the read order of the rectangular region 31-1 is designated and the rectangular region 31-1 is set in the setting storing section 24 as read range. The flow of setting processing of the read range in the scanner 11 is mentioned later.

When the rectangular region 31-1 is set as read range, the setting completion of the read range is informed from the scanner 11 to the host PC 12 (step S207). After the PC communicating section 16 receives the information, the PC controlling section 18, displays a selection scene (not shown) to make user select any of designation continuation of the read range and beginning of reading process in the displaying section 14.

When the designation continuation of read range is selected (step S208) in the selectaon scene, the PC controlling section 18 controls the displaying section 14 to execute display of the manuscript image 30 (step S202). Continuously, the host PC 12 repeats the processing from step S203 to S206, as shown by Fig. 3A, and designates the rectangular region 31-2 as read range. Then, coordinate "a" (200, 600), coordinate "c" (450, 700), designation resolution information "300dpi" and designation color mode "monochrome" that correspond to the rectangular region 31-2 are sent from the host PC 12 to the scanner 11 (step S206).

Then, in the scanner 11, after coordinate "a", coordinate "c", designation resolution information and designation color mode information of the rectangular region 31-2 are stored in the setting storing section 24, and the rectangular region 31-2 is set as read range, when setting completion of the read range is informed from the scanner 11 to the host PC 12 (step S207), the PC controlling section 18 displays a selection scene in the displaying section 14.

If the selection scene, after the designation continuation of read range is set (step S208), the manuscript image 30 is displayed on the displaying section 14 (step S202). Then, the host PC 12 repeats the processing from step 203 to step 206, as shown by Fig 3B, and designates rectangular region 31-3 as a read range. The host PC 12 sends coordinate "a" (100, 300), coordinate "c" (400, 500), designation resolution information "600dpi" and designation color mode "gray scale" that correspond to the rectangular region31-3 to the scanner 11 (step S206).

In the scanner 11, after coordinate "a", coordinate "c", designation resolution information and designation color mode information of the rectangular region 31-3 are stored in setting storing section 24, when setting completion of the read range is informed to the host PC 12 (step S207), the PC controlling section 18 displays the selection scene in the displaying section 14 once more.

Thus, 3 rectangular regions 31-1, 31-2, 31-3 are set as read ranges and when user selects a beginning of reading process in the selecting scene (step S208), the electing and inputting section 15 inputs a reading request into PC controlling section 18 (step S209).

The PC controlling section 18 sends the reading request which is input to the scanner 11 through the PC communicating section 16 (step S210). By this, the designation processing of the read range in the host PC 12 is completed.

As stated above, after the read range and the read condition are designated in the host PC 12, coordinate "a" and coordinate "c" as range information of the read range, and designation resolution information and designation color mode information as read condition information are sent to the scanner 11, and then the read range is set.

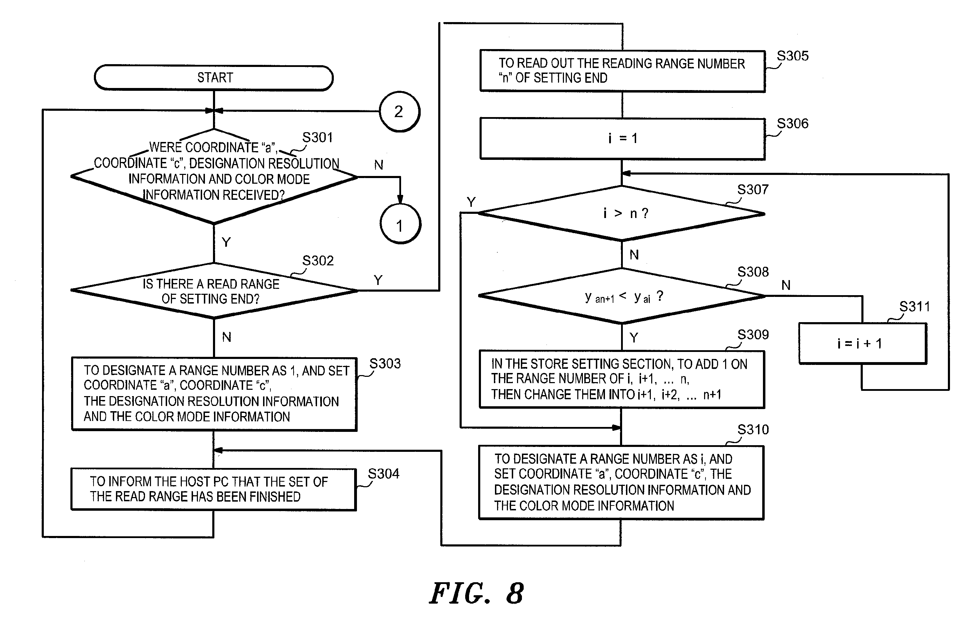

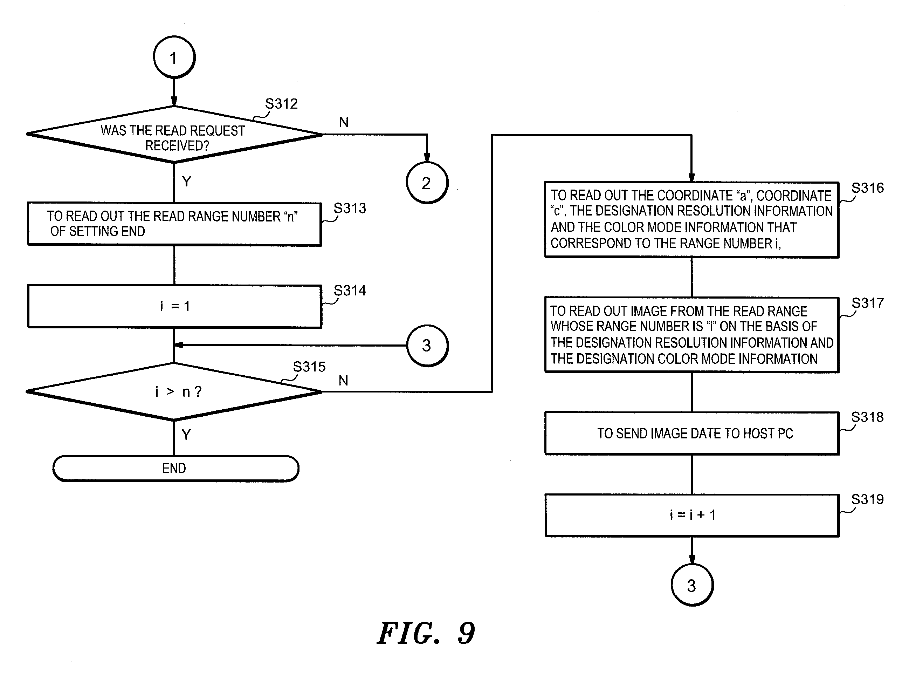

Next, it is to explain about a flow of setting of respective read ranges and reading process in the scanner 11 by Fig 8 and Fig 9.

Fig. 8 is a first flow chart for explaining setting read operation in embodiment 1 of scanfer of the present invention; Fig. 9 is a second flow chart for explaining setting read operation in embodiment 1 of scanner of the present invention.

Here, as explained in the Fig. 7, it is to explain an example in the case that reading request is input and sent to the scanner 11 after the rectangular regions 31-1, 31-2, 31-3 (Fig. 3B) are designated in order as read range in the host PC 12.

In the scanner 11, the scanner communicating section 19, when receiving coordinate "a", coordinate "c", designation resolution information and designation color mode information that correspond to the rectangular region 31-1 (Fig. 3A) from the host PC 12 (step S301), the scanner controlling section 26 should set the rectangular region 31-1 as read range, and sends the coordinate "a", the coordinate "c", the designation resolution information and the designation color mode information that are received into the designating section 25. Here, coordinate "a" (50, 50), coordinate "c" (300, 150), designataon resolution information "200dpi" and designation color mode information "color" are sent to the designating section 25 from the PC controlling section 26.

The designating section 25, when coordinate "a", coordinate "c", designation resolution information and designation color mode information are received from the scanner controlling section 26, temporarily stores these; and judges whether or not read range of setting end is existent in the setting storing section 24 (step S302). In the setting storing section 24, because the read range is unsettled, the designating section 25 judges the read range of setting end is nonexistent (step S302).

When the set read range is nonexistent, the designating section 25 designates "1" as range number as the read order of the rectangular region 31-1 (step S303). Then, the designating section 25 makes the setting storing section 24 store the coordinate "a", the coordinate "c", the designation resolution information and the designation color mode information that are received and correspond to the designated range number "1" (step S303). In the setting storing section 24, (50, 50) in coordinate "a" item, (300, 150) in coordinate "c" item, "200dpi" in designation resolution item and "color" in designation color mode item that correspond to the range number 1 are respectively stored. By this, the rectangular region 31-1 is set as read range.

Continuously, the scanner controlling section 26 informs the host PC 12 of the setting completion of read range to through the scanner communicating section 19 (step S304).

The host PC 12, when informed of the setting completion from the scanner 11, next, designates the rectangular region 31-2(Fig 3A) as read range, and sends coordinate "a" (200, 600), coordinate "c" (450, 700), designation resolution information "300dpi" and designation color mode information "monochrome" to the scanner 11.

In the scanner 11, when the scanner communicating section 19 receives coordinate "a", coordinate "c", designation resolution information and designation color mode information that correspond to the rectangular region 31-2 (step S301), the scanner controlling section 26 sends the coordinate "a", the coordinate "c", the designation resolution information and the designation color mode information that are received to the designating section 25.

The designating section 25 temporarily stores the coordinate "a", the coordinate "c", the designation resolution information and the designation color mode information that are received; and judges whether or not read range of setting end is existent in the setting storing section 24 (step S302). In the setting storing section 24, because coordinate "a", coordinate "c", designation resolution information and designation color mode information of the rectangular region 31-1 that correspond to the range number "1" are stored, the designating section 25 judges that the read range of setting end is existent (step S302).

When the read range of settang end is existent, the designating section 25 designates a read order of the rectangular region 31-2. The designating section 25 compares the y-coordinate value which is included in the coordinate "a" of read range of setting end with the y-coordinate value of the coordinate "a" corresponding to the rectangular region 31-2, and designates the read order according to which the y-coordinate value gradually decreases.

Firstly, the designating section 25 reads out read range number n of setting end (step S305). In the setting storing section 24, because only the read range corresponding to range number "1" is set, the designating section 25 reads out n=1.

Continuously, the designating section 25 performs a judgment about the read order of the read range corresponding to range number "i" on which the range number is set as i (i=1,2...), and the rectangular region 31-2.

Firstly, when i=1 (step S306), the i is compared with the read range number n of setting end in the setting storing section 24, in order to judge whether or not read range corresponding to the range number "i" is set, it is judged whether or not i>n (step S307). Here, because i=n=1, the designating section 25 judges that it is not i>n, that is, the read range corresponding to range number "i" is set (step S307).

Continuously, the designating section 25 reads out y-coordinate value yₐ₂ from coordinate "a" (xₐ₂, yₐ₂) in the rectangular region 31-2; and reads out the y-coordinate value yₐ₁ from the coordinate "a"(xₐ₁, yₐ₁) of setting end corresponding to range number "i=1". Then, the designating section 25 compares yₐ₁ and yₐ₂, and judges their magnitude (step S308). Here, according to yₐ₂=600 and yₐ₁=50, the designating section 25 judges that yₐ₂> yₐ₁ (step S308). On the basis of this, the designating section 25 judges that the read order of the rectangular region 31-2 is ranked after the read range of setting end, i.e. the read order of the rectangular region 31-1 corresponding to range number "i=1".

Next, the designating section 25 adds 1 to the range number "i=1", and then the range number becomes "i=2" (step S311). At this time, if the read range number of setting end is n=1, the designating section 25 judges that i>n, that is, the read range corresponding to the read range number has not been set (step S307).

Then, the designating section 25 designates the range number of the rectangular region 31-2 as "i=2", and makes the setting storing section 24 store coordinate "a" (200, 600), coordinate "c", designation resolution information "300dpi" and designation color mode information "color" of the rectangular region 31-2 that correspond to the designation range number 2 that is designated as shown by Fig 5A (step 310). By this, the rectangular region 31-2 is set as read range.

Continuously, the scanner controlling section 26 informs the host PC 12 of setting completion of the read range through the scanner communicating section 19 (step S304).

The host PC 12, When informed of the setting completion from the scanner 11, continuously, designates the rectangular region 31-3 (Fig 3B) as read range, and sends the coordinate "a" (100, 300), coordinate "c" (400, 500), designation resolution information "600dpi" and designation color mode information "gray scale" of the rectangular region 31-3 (Fig 3B) to the scanner 11.

In the scanner 11, when the scanner communicating section 19 receives coordinate "a", coordinate "c", designation resolution information and designation color mode information that correspond to the rectangular region 31-3 from the host PC 12 (step S301), the scanner controlling section 26 sends the coordinate "a", the coordinate "c", the designation resolution information and the designation color mode information that are received to the designating section 25.

The designating section 25 temporarily stores the coordinate "a", the coordinate "c", the designation resolution information and the designation color mode information that are received3 and judges whether or not the read range of setting end is existent in the setting storing section 24 (step S302). In setting storing section 24, because coordinate "a", coordinate "c", designation resolution information and designation color mode information of the rectangular region 31-1 that correspond to the range number "1",and coordinate "a", coordinate "c", designation resolution information and designation color mode information of the rectangular region 31-2 that correspond to the range number 2 are respectively stored, the designating section 25 judges that the read range of setting end is existent (step S302), and reads out the read range number of setting end n=2 (step S305).

Continuously, the designating section 25 designates the read order of rectangular region 31-3. Firstly, it is judged that the range number is set as "i=1" (step S306), and the read range corresponding to the range number "i=1" is set, that is, not i>n (step S307).

Then, the designating section 25 reads out y-coordinate value yₐ₃ from coordinate "a" (xₐ₃, yₐ₃) in the rectangular region 31-3; and reads out the y-coordinate value yₐ₁ from the coordinate "a"(xₐ₁, yₐ₁) of setting end corresponding to range number "i=1". Then, the designating section 25 compares yₐ₃ and yₐ₁, and judges their magnitude (step S308). Here, according to yₐ₃=300 and yₐ₁=50, the designating section 25 judges that yₐ₃> yₐ₁ (step S308). On the basis of this, the designating section 25 judges that the read order of rectangular region 31-3 is ranked after the read range of setting end, i.e. the read order of the rectangular region 31-1 corresponding to range number "i=1".

Next, the designating section 25 adds 1 to the range number "i=1", and then the range number becomes "i=2" (step S311). At this time, if the read range number of setting end n=2, the designating section 25 judges that is not i>n, that is, the read range corresponding to the range number "i=2" has been set (step S307).

Then, the designating section 25 reads out y-coordinate value yₐ₂ from coordinate "a" (xₐ₂, yₐ₂) of setting end corresponding to the range number "i=2". Then, the designating section 25 compares yₐ₂ and yₐ₃, and judges their magnitude (step S308). Here, according to yₐ₃=300 and yₐ₂=600, the designating section 25 judges that yₐ₃< yₐ₂ (step S308). On the basis of this, the designating section 25 judges that the read order of rectangular region 31-3 is ranked before the read range of setting end, i.e. the read order of the rectangular region 31-1 corresponding to range number "i=1".

On the basis of the judgment, the designating section 25, in each read range of the range number i=1∼n which is set in the setting storing section 24, in order to rank the read order of each read range corresponding to range number i=2∼n after the read order of the rectangular region 31-3, respectively adds 1 to the range number i=2∼n, and then the range number is changed into i=3∼n+1 (step S309). Here, because n=2, the range number "2" is changed into range number "3" in the setting storing section 24.

Continuously, the designating section 25 designates the range number of the rectangular region 31-3 as "i=2", and makes the setting storing section 24 correspond to the range number "2", and store coordinate "a" (100, 300), coordinate "c" (400, 500), designation resolution information "600dpi" and designation color mode information "gray scale" of the rectangular region 31-3, as shown by Fig. 5B in (step S310). By this, the rectangular region 31-3 is set as read range.

Continuously, the scanner controlling section 26 informs the host PC 12 of the setting completion of read range through the scanner communicating section 19 (step S304).

After the host PC 12 is informed of the setting completion from the scanner 11, when the beginning of reading process is selected by user, and reading request is input, the reading request is sent to the scanner 11.

In the scanner 11, when the scanner communicating section 19 receives the reading request from the host PC 12 (step S312), the scanner controlling section 26 controls the reading section 22, and begins reading process of each read range.

The scanner controlling section 26, firstly, reads out the read range number n of setting end from the setting storing section 24 (step S313). In the setting storing section 24 (Fig 5B), because 3 read ranges are setting end, the scanner controlling section 26 reads out n=3.

Continuously, the scanner controlling section 14 compares the i, that i=1 (step S314) with the range number n that is read out, in order to judge that whether or not the read range corresponding to the range number "i" has been set, judges that whether or not i>n (step S315). Here, according to i=1 and n=3, because i<n, so the scanner controlling section 26 judges that the read range of the range number "i=1" has been set.

Next, the scanner controlling section 26 reads out the set coordinate "a", the set coordinate "c", the designation resolution information and the designation color mode information that correspond to the range number "i=1" from the setting storing section 24(Fig. 5B) (step S316). The scanner controlling section 26 reads out the read range, that is, coordinate "a" (50, 50), coordinate "c" (300, 150), designation resolution information "200dpi" and designation color mode information "color" of the rectangular region 31-1(Fig 3B) that correspond to range number "i=1".

Then, on the basis of reading beginning instruction from the scanner controlling section 26, the reading section 22 regards the rectangular region 31-1 as read range, and reads out image of the read range (step S317). The reading section 22, firstly, when parallel moving in the auxiliary scan direction to the position of y-coordinate value yₐ₁ =50 of coordinate "a" that is read out, reads the one line part of image from x-coordinate value xₐ₁=50 of coordinate "a" to x-coordinate value x_{c1}=300 of coordinate "c", and sends it to the image storing sectiof 23 to store it. At this time, the reading section 22 reads the image in the interval of 200dpi (dot/inch) in the main scan direction in color mode. The reading section 22, while continuing to parallel move furthermore, reads one line part of image from xₐ₁=50 to x_{c1}=300 every advancing 1/200 inch in the auxiliary scan direction, and sends the image data to the image storing section 23 to store it. The reading section 22 repeats the reading process from the position of y-coordinate value yₐ₁=50 of coordinate "a" to the position of y-coordinate value y_{c1}=150 of coordinate "c". By this, the read of the image of the rectangular region 31-1 is completed.

When the read is completed, the scanner controlling section 26 reads the image data of the rectangular region 31-1 from the image storing section 23, and sends the image data to the host PC 12 through the scanner communicating section 19 (step S318).

In host PC 12, when PC communicating section 16 receives the image date, PC controlling stores the image data in image storing section 17.

Further, the scanner controlling section 26, when adding 1 to range number "i=1", then the range number becomes i=2 (step S319), compares the i with read range number n, in order to judge whether or not the read range corresponding to the range number "i" has been set , judges that whether or not i>n (step S315). Here, according to i=2 and n=3, because of i<n, the scanner controlling section 26 judges that read range of range number "i=2" has been set (step S315).

Next, the scanner controlling section 26 reads out the set coordinate "a", coordinate "c", designation resolution information and designation color mode information of setting end that correspond to the range number "i=2" from the setting storing section 24 (Fig 5B) (step S316). The scanner controlling section 26 reads out the read range that is, coordinate "a" (100, 300), coordinate "c" (400, 500), designation resolution information "600dpi" and designation color mode information "gray scale" of the rectangular region 31-3(Fig 3B) that correspond to range number 2.

Then, on the basis of control of the scanner controlling section 26, the reading section 22 regards the rectangular region 31-3 as read range, and reads image of the read range (step S317). The reading section 22, firstly, after parallel moved in the auxiliary scan direction from the position of y-coordinate value y_{c1}=150 of coordinate "c" of the rectangular region 31-1 corresponding to the range number "1" to the position of y-coordinate value yₐ₃=300 of coordinate "a" of the rectangular region 31-3 corresponding to the range number "2", reads the one line part of image from x-coordinate value xₐ₃=100 of coordinate "a" to x-coordinate value x_{c3}=400 of coordinate "c", and sends it to the image storing section 23 to store it. At this time, the reading section 22 reads the image in the interval of 600dpi (dot/inch) in the main scan direction in gray scale. The reading section 22, while continuing to parallel move in the auxiliary scan direction, reads one line part of image from xₐ₁=100 to x_{c1}=400 every advancing 1/600 inch, and sends the image data to the image storing section 23 to store it. The reading section 22 repeats the reading process from the y-coordinate value yₐ₃=300 of coordinate "a" to the position of y-coordinate value y_{c3}=500 of coordinate "c", and reads the image of the rectangular region 31-3.

Continuously, the scanner controlling section 26 reads out the image data of the rectangular region 31-3 from the image storing section 23, and sends the image data to the host PC 12 through the scanner communicating section 19 (step S318).

In the host PC 12, after the PC communicating section 16 receives the image data, the PC controlling section 18 makes the PC storing section 17 store the image data.

Further, the scanner controlling section 26, when adding 1 to range number "i=2", then the range number becomes "i=3" (step S319), compares the i with the read range number n, if order to judge whether or not the read range corresponding to the range number "i" is set, judges whether or not i>n (step S315). Here, according to i=3 and n=3, because i=n, the scanner controlling section 26 judges the read range of range number "i=3" has been set (step S315).

Next, the scanner controlling section 26 reads out coordinate "a", coordinate "c", designation resolution information and designation color mode information of setting end that correspond to the range number "i=3" from the setting storing section 24(Fig 5B) (step S316). The Scanner controlling section 26 reads out the read range, that is, coordinate "a" (200, 600), coordinate "c" (450, 700), designation resolution information "300dpi" and designation color mode information "monochrome" of the rectangular region 31-2(Fig. 3B) that correspond to the range number 3.

Then, on the basis of control of the scanner controlling section 26, the reading section 22 regards the rectangular region 31-2 as read range, and reads image of the read range (step S317). The reading section 22, firstly, after parallel moved in the auxiliary scan direction from the position of y-coordinate value y_{c3}=500 of coordinate "c" of the rectangular region 31-3 corresponding to the range number "2" to the position of y-coordinate value yₐ₂=600 of coordinate "a" of the rectangular region 31-2 corresponding to the range number "3", reads the one line part of image from x-coordinate value xₐ₂=200 of coordinate "a" to x-coordinate value x_{c2}=450 of coordinate "c", and sends it to the image storing section 23 to store it. At this time, the reading section 22 reads the image in the interval of 300dpi (dot/inch) in the main scan direction in monochrome. The reading section 22 continues to parallel move in the auxiliary scan direction, reads one line part of image from xₐ₂=200 to x_{c2}=450 every advancing 1/300 inch at the same time, and sends the image data to the image storing section 23 to store it. The reading section 22 repeats the reading process froe the y-coordinate value yₐ₂=600 of coordinate "a" to the position of y-coordinate value y_{c2}=700 of coordinate "c", and reads the image of the rectangular region 31-2.

Continuously, the scanner controlling section 26 reads out the image data of the rectangular region 31-2 from the image storing section 23, and sends the image data to the host PC 12 through the PC communicating section 19 (step S318).

In the host PC 12, when the PC communicating section 16 receives the image data, the PC controlling section 18 makes the PC storing section 17 store the image data.

Further, the scanner controlling section 26, when adding 1 to range number "i=3", then the range number becomes "i=4" (step S319), compares the i with the read range number n, in order to judge whether or not the read range corresponding to the range number "i" has been set, judges whether or not i>n (step S315). Here, according to i=4 and n=3, because i>n, the scanner controlling section 26 judges that the read range gf range number "i=4" has not been set (step S315). By this, the setting reading process in scanner 11 is completed.

As stated above, read order of each read range that is designated is designated in the host PC 12; and read condition is set in the setting storing section 24. Then, according to the read order, the reading process of each read range is executed on the basis of the read condition that is set.

As stated above, the scanner system 10 of this embodiment, when plural read ranges are designated in one manuscript image 30, designates a read order on the basis of the position of respective read ranges in the auxiliary scan direction of the scanner 11. Then, according to the read order, the scanner 11, because reading image of respective read ranges, it is possible to shorten read operation. Further, when different read conditions are set with respect to respective read ranges, because it is possible to read image by changing read condition of each read range without repeating the scan of the manuscript 13, so it becomes possible to shorten further reading operation. Therefore, it becomes possible to execute the reading process efficiently.

Moreover, in this embodiment, there is not limit for the scanner 11 to obtain rectangular manuscript image 30. It is also possible to obtain image beyond the rectangular shape. Similarly, the designation of each read range is also not limited in the rectangular region.

Further, in this embodiment, the scanner 11 sends the image data of each read range to the host PC 12, but, the image data of each read range may also send to the host PC 12 after the completion of reading process with respect to all read ranges.

### <Embodiment 2>

In the scanner 11 of embodiment 1, on the basis of the position of the auxiliary scan direction of each read range in the manuscript image 30 (Fig. 3A and Fig. 3B), a read order is set, and according to the read order, reading process of the image of each read range is executed.

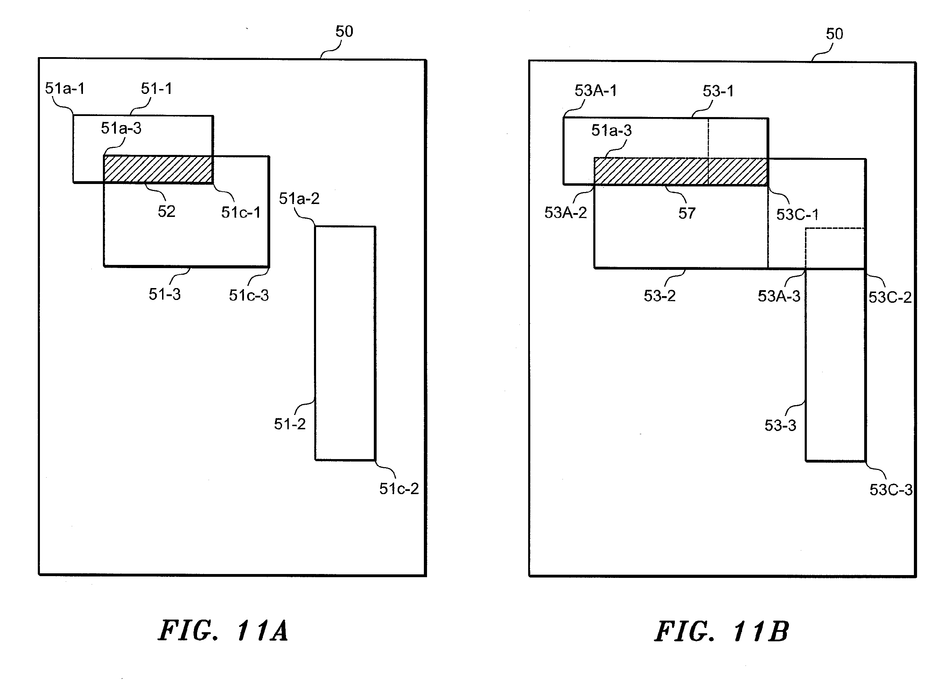

And yet, there is a case that overlapping parts that overlap in plural read ranges are existent. The example is shown by Fig. 11.

Fig. 11A is a second explanation diagram showing a designation example of read range in manuscript image (I); Fig. 11B is a second explanation diagram showing a designation example of read range in manuscript image (II).

In the Fig. 11A, in the manuscript image 50, 3 rectangular regions 51-1, 51-2, 51-3 are respectively designated as read ranges. The rectangular region 51-1 and 51-3 are mutually overlapped in rectangular region 52 which is shown by oblique lines. That is, the rectangular region 52 is the overlapping part of rectangular 51-1 and 51-3.

Thus, when overlapping part is existent in plural read ranges, and different read conditions are set in respective read ranges, the scanner 11 must perform read of image of the overlapping part every read condition. Therefore, there is a problem that images of respective read ranges by scanning once could not be read.

The scanner and the scanner system in this embodiment, in order to solve the problem stated above, are composed as following.

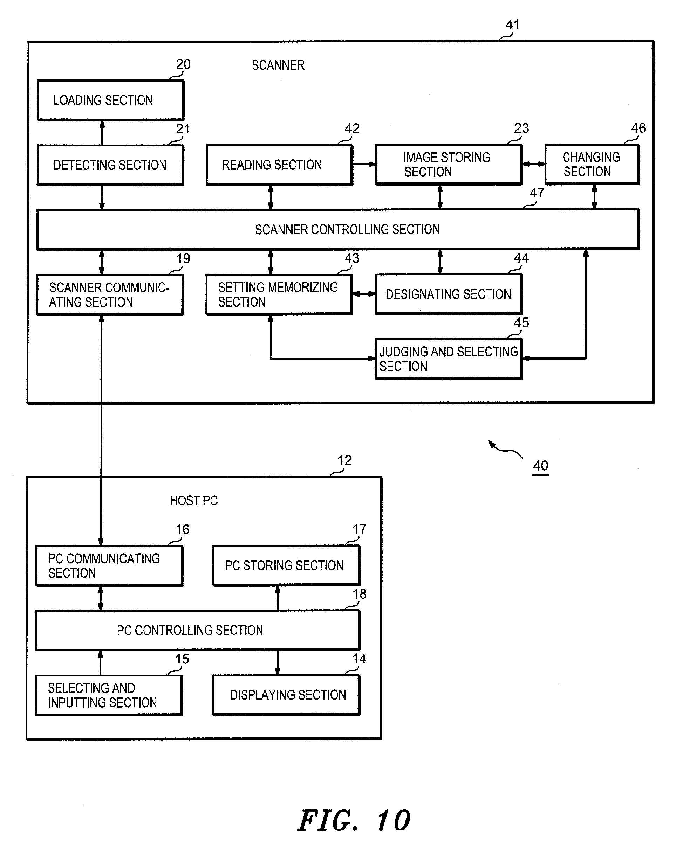

Fig. 10 is a block diagram showing a structure of a scanner system in embodiment 2 of the present invention.

The scanner system 40 of this embodiment is a structure that adds a judging and selecting section 45 and a changing section 46 in the scanner 41, but is different from the embodiment 1.

Moreover, in this embodiment, the same structure as the embodiment 1 is shown by the same mark, and the explanations about these are omitted.

The scanner system 40, as shown by Fig. 10, comprising a scanner 41 as an image reading apparatus and a host PC 12 as a upper apparatus. A connection method between the scanner 41 and the host PC 12 may be any of USB (Universal Serial Bus) connection and parallel connection and the like.

The scanner 41, as shown by Fig. 10, comprising a scanner communicating section 19, a loading section 20, a detecting section 21, a reading section 42, an image storing section 23, a setting storing section 43, a designating section 44, a judging and selecting section 45, a changing section 46 and a scanner controlling section 47.

The reading section 42, on the basis of coordinate "A", coordinate "C" that are informed by the scanner controlling section 47 (stated later), designation resolution information and designation color mode information, reads image of prior read range (stated later) that is designated by coordinate "A" and coordinate "C", then changes it into image data, i.e. prior image, and then sends it to the image storing section 23.

The setting storing section 43, as a storing section, stores the coordinate "a" and the coordinate "c" as range information of respective read ranges, and the designation resolution information and the designation color mode information as read condition information.

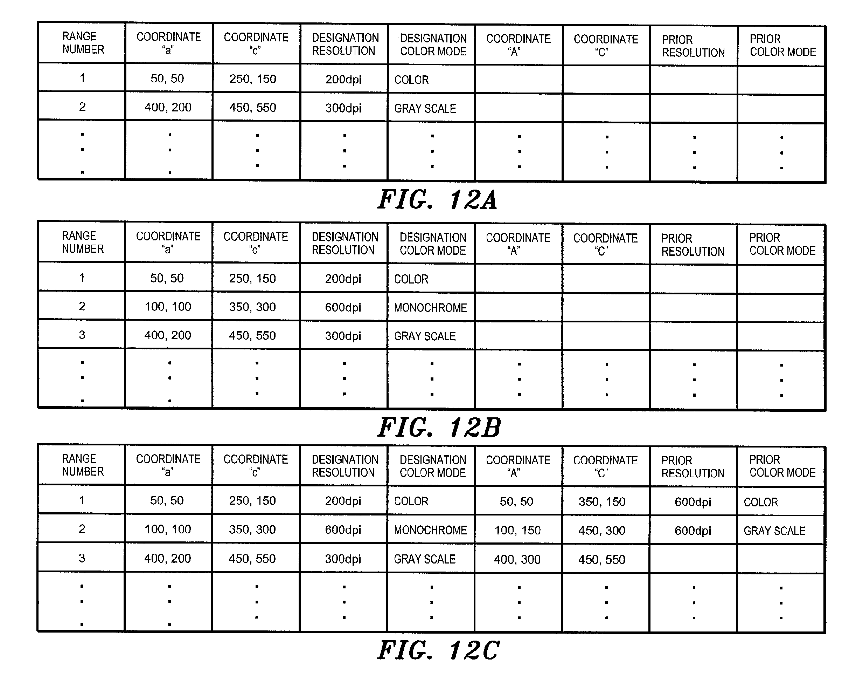

Fig. 12A is a first explanation diagram showing a structure of setting storing section in embodiment 2; Fig. 12B as a second explanation diagram showing a structure of setting storing section in embodiment 2; Fig. 12C is a third explanation diagram showing a structure of setting storing section in embodiment 2.

In the setting storing section 43, as shown by Fig. 12A, Fig. 12B, Fig. 12C, corresponding to range numbers "i" (i=1, 2 ...) of respective read ranges, coordinate item "a" and coordinate item "c" are set, and then coordinate "a" (xₐᵢ, yₐᵢ) and coordinate "c" (x_{ci}, y_{ci}) of the corresponding read ranges are respectively stored. These coordinate "a" and coordinate "c", the same as the embodiment 1, are input on the basis of the designation of user in the host PC 12, and then are sent to the scanner 41. Further, the range numbers of respective read ranges show a read order of the read range. The range number is designated on the basis of the position in the auxiliary coordinate direction, i.e. Y-coordinate direction of each read range in order to meet yₐ₁≤yₐ₂≤... by the designating section44. The designation order of the range number is stated later through the designating section44.

Further, in the setting storing section 43, corresponding to range numbers "i" (i=1, 2 ...), designation resolution item and designation color mode item are also set, and then designation resolution information and designation color mode information that are set to correspond to respective read ranges are respectively stored. These designation resolution information and designation color mode information, similarly, are input on the basis of the designation of user in the host PC 12, and then are sent to the scanner 41.

Furthermore, in the setting storing section 43 of this embodiment, corresponding to range numbers "i" (i=1, 2 ...), coordinate item "A" and coordinate item C are set. In the coordinate item "A" and coordinate item C, coordinate "A" (x_{Ai}, y_{Ai}) and coordinate "C" (x_{Ci}, y_{Ci}) of the corresponding read ranges are respectively stored. The coordinate "A" and the coordinate "C" are formed from the coordinate values that are set by the judging and selecting section 45 stated later, and designate a rectangular region. The rectangular region becomes a read range on which reading process is actually executed by the reading section 42. In other words, the actual read ranges (xᵢ, yᵢ) become a coordinate region meeting (x_{Ai}, y_{Ai}) ≤(xᵢ, yᵢ) ≤(x_{Ci}, y_{Ci}) through the reading section 42. The read range that is designated by the coordinate "A" and the coordinate "C" is recorded as a prior read range, and the read range that is designated by the coordinate "a" and the coordinate "c" stated above is recorded as a designation read range. Respective coordinates "A" and coordinates "C" are set to meet y_{A1}< y_{C1}≤y_{A2}< y_{C2} so that respective rectangular regions are not overlapped in the auxiliary scan direction.

Further, in the setting storing section 43 of this embodiment, corresponding to range numbers "i" (i=1, 2 ...), prior resolution item and prior color mode item are also set, and then prior resolution information and prior color mode information that are set and correspond to respective prior read ranges are respectively stored. These prior resolution information and prior color mode information are set by the judging and selecting section 45, and are used as prior resolution information when reading process as executed by the reading section 42.

For example, as shown by Fig. 12C, in the setting storing section 43, coordinate "A" (50, 50) and coordinate "C" (250, 150) that correspond to the range number "1" are respectively stored. It corresponds to coordinate values of two top points 51a-1 and 51c-1 possessed by the rectangular region 51-1 as designation read range that is designated by the host PC 12 in the manuscript image 50 (Fig. 11A). Further, designation resolution information "200dpi" and designation color mode information "color" that correspond to these are also respectively stored in the setting storing section 43.

Furthermore, as shown by Fig. 12C, in the setting storing section 43, coordinate "A" (50, 50) and coordinate "C" (250, 150) that correspond to the range number "1" are respectively stored. It corresponds to coordinate values of two top points 51A-1 and 51C-1 possessed by the rectangular region 53-1 as prior read range that is set by the judging and selecting section 45 in the manuscript image 50 (Fig. 11B). Further, prior resolution information "600dpi" and prior color mode information "color" that correspond to these are also respectively stored in the setting storing section 43. In this embodiment, the reading section 42 performs reading process with respect to the rectangular region 53-1 that is designated by the coordinate "A" (50, 50) and the coordinate "C" (250, 150) on the basis of the prior resolution information "600dpi" and the prior color mode information "color".

The designating section 44 designates a read order of plural read ranges that are designated with respect to the manuscript image 50, and gives range numbers to respective designation read range on the basis of the read order. In this embodiment, the designating section 44 designates the read order on the basis of the y-coordinate value which is included in each coordinate "a" of setting end in the setting storing section 43 and the y-coordinate value which is included in the coordinate "a" that is received from the scanner controlling section 47.

For example, it is to consider in the case that respective information including coordinate "a" coordinate "c" with respect to designation read range 1, 2, ... n-1 is stored to correspond to range numbers "1", "2", ... "n-1" in the setting storing section 43.

The designating section 44, after received coordinate "a" (xₐₙ, yₐₙ), coordinate "c" (x_{cn}, y_{cn}), designation resolution information and designation color mode information that correspond to the designation read range from the scanner controlling section 47, firstly, reads out the received y-coordinate values "yₐₙ" of the coordinate "a"; reads out respective y-coordinate values "yₐ₁", "yₐ₂", ..., yₐₙ₋₁ from coordinates "a" that are stored in the setting storing section 43 and correspond to respective range numbers "1", "2", ... "n-1"; compares these; and then judges their magnitude. Here, the y-coordinate values that are included in respective coordinates "a" become yₐ₁≤yₐ₂≤...≤ yₐₙ₋₁ in the order of the range number.

When it is judged that yₐᵢ₋₁< yₐₙ< yₐᵢ, the designating section 44 adds 1 to respective range numbers "i", "i+1", ... "n-1" of setting end respectively in the setting storing section 43, and then the range numbers of setting end are changed into "i+1", "i+2", ... "n". Then, the range number of designation read range n is designated as "i", and the setting storing section 43 is made to store coordinate "a", coordinate "c", designation resolution information and designation color mode information that are received from the canner controlling section 47 to correspond to the range number "i".

Further, when yₐₙ is any of y-coordinate value, for example, y-coordinate value yₐᵢ of coordinate "a" corresponding to the range number "i", that is, yₐₙ=yₐᵢ, the designating section 44 also designates a read order on the basis of the coordinate "c". In other words , the designating section 44 reads out the y-coordinate value y_{cn} of coordinate "c" received from the scanner controlling section 47; reads out the y-coordinate value y_{ci} from the coordinate "c" that is stored in the setting storing section 43 corresponding to range number "i; then compares y_{cn} and y_{ci}; and judges their magnitude.

When it is judged that y_{cn}< y_{ci}, the designating section 44 adds 1 to respective range numbers "i", "i+1", ... "n-1" of setting end respectively in the setting storing section 43, and then the range numbers of setting end are changed into "i+1", "i+2", ... "n"; designates the range number of the designation read range n as "i"; and makes the setting storing section 43 store coordinate "a", coordinate "c", designation resolution information and designation color mode information that are received from the canner controlling section 47 to correspond to the range number "i".

Further, when it is judged that y_{cn}≥ y_{ci}, the designating section 44 adds 1 to respective range numbers "i+1", "i+2", ... "n-1" of setting end respectively in the setting storing section 43, and then the range numbers of setting end are changed into "i+2", "i+3", ... "n"; designates the range number of the designation read range n as "i+1"; and makes the setting storing section 43 store coordinate "a", coordinate "c", designation resolution information and designation color mode information that are received from the canner controlling section 47 to correspond to the range number "i".

The designating section 44, after designated the range number, and the setting storing section 43 is made to store coordinate "a", coordinate "c", designation resolution information and designation color mode information as stated above, informs the scanner control section 47 of the setting completion of the read range.

The judging and selecting section 45, as a judging section, judges whether or not there is overlapping in the auxiliary scan direction in each designation read range that is set in the setting storing section 43. Further, the judging and selecting section 45 performs setting of the rectangular region, i.e. prior read range in order to perform the reading process actually through the reading section 42 with respect to each designation read range. Furthermore, the judging and selecting section 45, as a selecting section, selects and sets prior resolution information and prior color mode information.

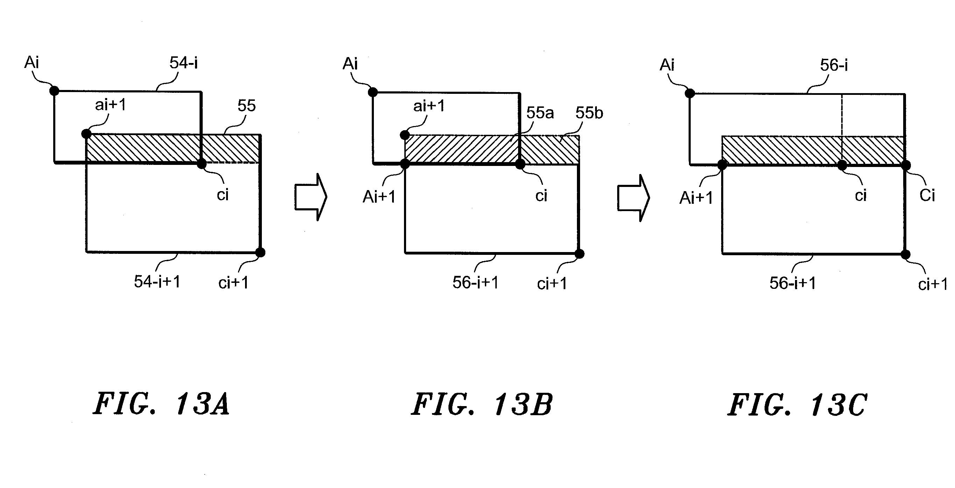

It is to explain simply about a judgment of existence and nonexistence of overlapping and a setting of the prior read range through the judging and selecting section 45 by using the Fig. 13.

Fig. 13A is a first explanation diagram showing a setting example of prior read range; Fig. 13B is a second epplanation diagram showing a setting example of prior read range; Fig. 13C is a third explanation diagram showing a setting example of prior read range.

As shown by Fig. 13A, rectangular region 54-i and 54-i+1 are designation read ranges that correspond to range numbers "i" and "i+1" respectively. With respect to the respective rectangular region 54-i and 54-i+1, after it is judged whether or not overlapping is existent, it is to explain the situation that sets coordinate "c" (x_{ci}, y_{ci}) corresponding to range number "i" and coordinate "A" (x_{Ai+1}, y_{Ai+1}) corresponding to range number "i+1". Moreover, coordinate "A" (x_{Ai}, y_{Ai}) corresponding to range number "i" has been already set, coordinate "C" (x_{Ci+1}, y_{Ci+1}) corresponding to range number "i+1" is set on the basis of the existence/nonexistence of overlapping with designation read range of range number "i+2".

As shown by Fig. 13A, coordinate value of the top point "A" of the rectangular region 54-i corresponds to coordinate "A" (x_{Ai}, y_{Ai}) of setting end in t'e setting storing section 43 corresponding to the range number "i", and is formed from coordinate "C" (x_{Ci}, y_{Ci}) of setting end in the setting storing section 43 corresponding to range number "i". However, the rectangular region 54-i is judged that there is no overlapping with the rectangular region (not shown) corresponding to ranger number "i-1", and the coordinate value of the top point "aᵢ" is set in the setting storing section 43 as coordinate "A" for designating the prior read range.

Further, the coordinate value of the top point "aᵢ₊₁" of the rectangular region 54-i+1 corresponds to coordinate "a" (xₐᵢ₊₁, yₐᵢ₊₁) of setting end in the setting storing section 43 corresponding to range number "i+1"; and the coordinate value of the top point "cᵢ₊₁" is formed from coordinate "c" (x_{ci+1}, y_{ci+1}) of setting end in the setting storing section 43 corresponding to range number "i+1".

The judging and selecting section 45, after notified of the range number "i" (i=1,2, ...) from the scanner controlling section 47, judges whether or not there is a overlapping between the designation read range that is set corresponding to the range number "i" and the designation read range that is set corresponding to the range number "i+1", in the auxiliary scan direction. The judging and selecting section 45 reads out y-coordinate value y_{ci} from coordinate "c" (x_{ci}, y_{ci}) corresponding to range number "i"; reads out y-coordinate value yₐᵢ₊₁ from coordinate "c" (xₐᵢ₊₁, yₐᵢ₊₁) corresponding to range number "i+1"; then compares these; and then judges their magnitude.
when it is judged that y_{ci}≤ yₐᵢ₊₁, the judging and selecting section 45 judges that overlapping is nonexistent in the auxiliary scan direction in these designation read ranges . When it is judged that y_{ci}> yₐᵢ₊₁$ the judging and selecting section 45 judges that overlapping is existent in the auxiliary scan direction in these designation read ranges.

In the Fig. 13A, y_{ci}> yₐᵢ₊₁, it is judged that overlapping is existent in the auxiliary scan direction in the rectangular region 54-i and 54-i+1. The overlapping corresponds to rectangular region 55 shown by oblique lines as shown by Fig. 13A.

When it is judged overlapping is nonexistent, the judging and selecting section 45 regards coordinate "C" corresponding to range number "i" as coordinate "c" (x_{ci}, y_{ci}) to store coordinate item "C" corresponding to range number "i". Further, coordinate "A" corresponding to range number "i" is regarded as coordinate "a" (xₐᵢ₊₁, yₐᵢ₊₁) corresponding to range number "i+1" to store coordinate item "A" corresponding to range number "i+1". Furthermore, the judging and selecting section 45 regards designation resolution information and designation color mode information that correspond to range number "i" as prior resolution information afd prior color mode information to store in the corresponding prior resolution item and prior color mode item coordinate item.

When it is judged overlapping is existent, the judging and selecting section 45 performs setting change of y-coordinate value in order to delete the overlapping from the designation read range of range number "i+1". In other words, the judging and selecting section 45 changes the y-coordinate value yₐᵢ₊₁ of coordinate "a" (xₐᵢ₊₁, yₐᵢ₊₁) corresponding to range number "i+1" into y-coordinate value y_{ci} of coordinate "c" corresponding to "i", and then sets coordinate "A" (xₐᵢ₊₁, yₐᵢ₊₁). Then, the judging and selecting section 45 makes the coordinate item "A" store the coordinate "A" corresponding to range number "i+1".

Thus, the top point of the rectangular region corresponding to range number "i+1" is changed from top point aᵢ₊₁ shown by Fig. 13A into the top point Aᵢ₊₁ shown by Fig. 13B. By this, the rectangular region 55 as a overlapping is taken out from the rectangular region 54-a+1 (Fig. 13A), and the rectangular region 56-i+1 (Fig. 13B), as a prior read range corresponding to range number "i+1", is set.

However, as shown by Fig. 13A and Fig. 13B, rectangular region 54-i corresponding to range number "i" overlaps with the left side 55a of the rectangular region 55, but it does not overlap with the right side part 55b. Therefore, after the rectangular region 55 is taken out from the designation read range, the reading process with respect to the right side part 55b of the rectangular region 55 could not be executed.

Therefore, the judging and selecting section 45 performs setting change of x-coordinate value with respect to the prior read range corresponding to range number "i" in order to make the prior include the read range right side part 55b.

The judging and selecting section 45, firstly, reads out x-coordinate value x_{Ai} from coordinate "A" (x_{Ai}, y_{Ai}) corresponding to range number "i"; compares the x-coordinate value x_{Ai} with the x-coordinate value x_{Ai+1} of coordinate "A" (x_{Ai+1}, y_{Ai+1}) corresponding to range number "i+1"; and then judges their magnitude. Then, when it is judged that x_{Ai} > x_{Ai+1}, the judging and selecting section 45 makes the coordinate item "A" corresponding to range number "i" store the coordinate "A" (x_{Ai+1}, y_{Ai}) in order to change the x-coordinate value x_{Ai} of coordinate "A" corresponding to range number "i" into the x-coordinate value x_{Ai+1} of coordinate "A" corresponding to range number "i+1". When it is judged that x_{Ai} ≤x_{Ai+1}, the coordinate "A" (x_{Ai}, y_{Ai}) corresponding to range number "i" could not be changed.

Further, the judging and selecting section 45 reads out x-coordinate value x_{ci} from coordinate "c" (x_{ci}, y_{ci}) corresponding to range number "i"; compares the x-coordinate value x_{ci} with the x-coordinate value x_{ci+1} of coordinate "A" (x_{ci+1}, y_{ci+1}) corresponding to range number "i+1"; and then judges their magnitude. Then, when it is judged that x_{ci} < x_{ci+1}, the judging and selecting section 45 makes the coordinate item "C" corresponding to range number "i" store the coordinate "C" (x_{ci+1}, y_{ci}) in order to change the x-coordinate value x_{ci} of coordinate "c" corresponding to range number "i" into the x-coordinate value x_{ci+1} of coordinate "c" corresponding to range number "i+1". When it is judged that x_{ci} ≥x_{ci+1}, the corresponding coordinate item "C" is made to store the coordinate "c" (x_{ci}, y_{ci}) corresponding to range number "i" as coordinate "C".

In the Fig. 13B, because x_{Ai} <x_{Ai+1}, coordinate "A" (y_{Ai}, y_{Ai}) corresponding to range number "i" could not be changed. On the other hand, because x_{ci} <x_{ci+1}, coordinate "C" corresponding to range number "i" is changed into coordinate value (x_{ci+1}, y_{ci}) of top point Cᵢ shown by Fig. 13C. As a result, the rectangular region 56-i (Fig. 13C) including the right side part 55b of the rectangular region 55 is set as prior read range corresponding to range number "i".

Furthermore, the judging and selecting section 45, when overlapping between the designation read range corresponding to range number "i" and the designation read range corresponding to range number "i+1" is existent, reads out the designation resolution information corresponding to range number "i" and the designation resolution information corresponding to range number "i+1" from the setting storing section 43, and compares them, and then select any of the designation resolution information on which high is firstly selected. Then, corresponding prior resolution item is made to store the designation resolution information as prior resolution information to corresponding to range number "i".

Similarly, the judging and selecting section 45 reads out color mode information corresponding to range number "i" and color mode information corresponding to range number "i+1" from the setting storing section 43,and compares them ,and then select one of the prior color mode information on the basis of the predetermined prior order. Here, in respective color mode information, the prior order is previously determined in the order of "color", "gray scale" and "monochrome". The judging and selecting section 45, on the basis of the prior order, selects the prior color mode information, and makes corresponding prior color mode item store the prior color mode information as prior color mode information corresponding to range number "i".

The changing section 46 changes the prior image that is read on the basis of the prior resolution information and the prior color mode information into change image on the basis of the designation resolution information and designation color mode information. It is to explain about operation of the changing section 46 later in detail.

The scanner controlling section 47, as a controlling section, performs control of all sections in the scanner 41.

Further, the scanner controlling section 47 controls the changing section 46 for performing a change toward a change image of prior image.

Continuously, it is to explain operation of the scanner system 40 in this embodiment.

In the scanner 41, because the flow of the process for pre-scanning the manuscript (Fig. 6) and the flow of the process for designating plural read ranges (Fig. 7)are the same as embodiment 1, so explanations are omitted.

Here, it is to perform an explanation about the flow of setting process of each designation read range in the scanner 41 by using Fig. 12A, Fig. 12B, Fig. 12C, and Fig. 14, Fig. 15 that are shown below.

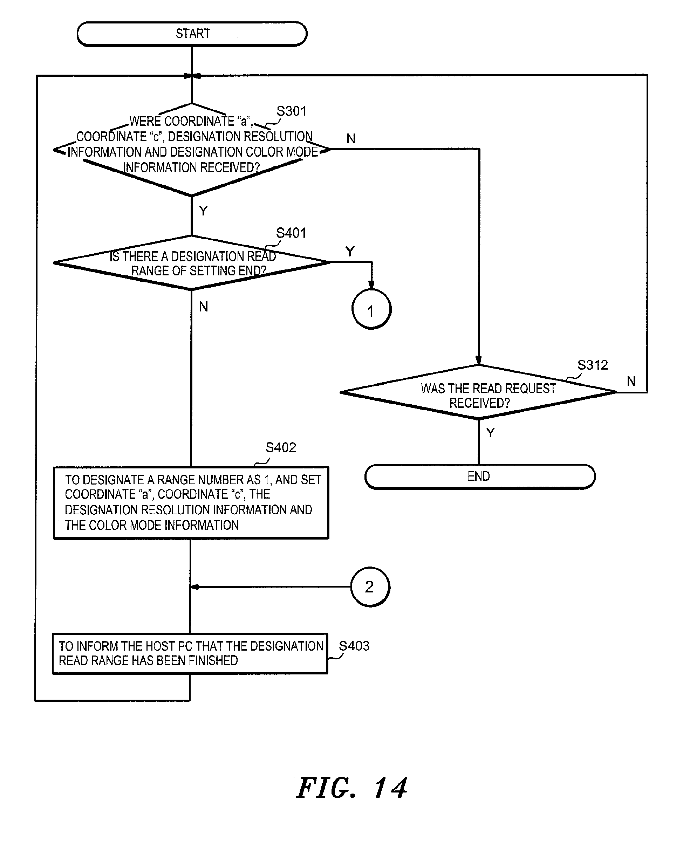

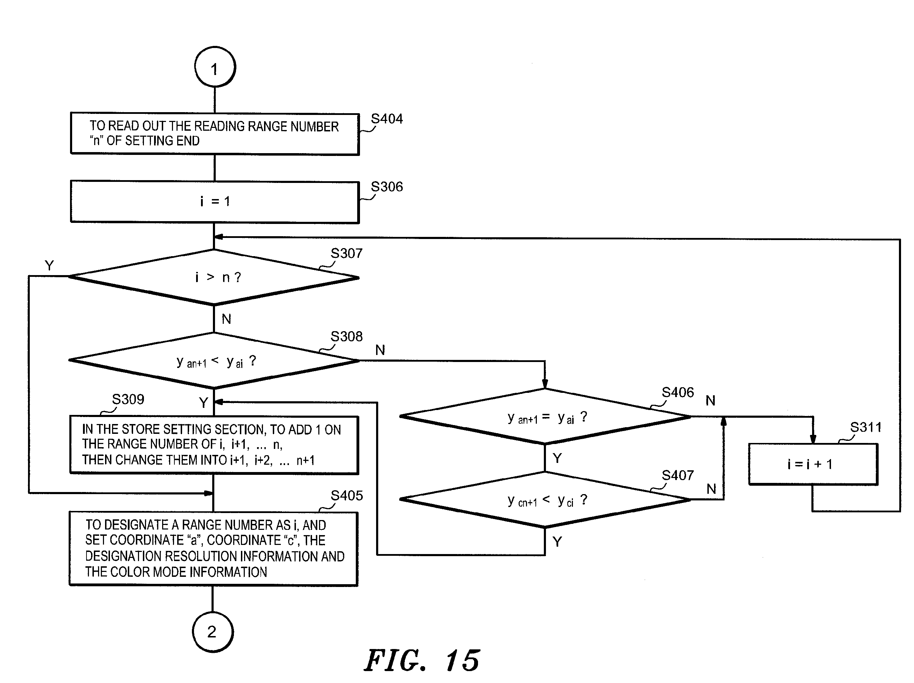

Fig. 14 is a first flow chart for explaining setting operation in embodiment 2 of scanner of the present invention; Fig. 15 is a second flow chart for explaining setting operatign in embodiment 2 of scanner of the present invention.

Here, in the host PC 12, it is to perform an explanation in the case that the rectangular region 51-1, 51-2 and 51-3 (Fig. 11A) are designated in order as a designation read range with respect to the manuscript image 50. Moreover, the detailed explanation of the same process as embodiment 1 is omitted.

In the scanner 41, the scanner communicating section 19, after received coordinate "a", coordinate "c", designation resolution information and designation color mode information that correspond to the rectangular region 51-1(Fig. 11A) from the host PC12 (step S301), the scanner controlling section 47 sends the coordinate "a", the coordinate "c", the designation resolution information and the designation color mode information that are received to the designating section 44 in order to set the rectangular region 51-1 as designation read range. Here, coordinate "a" (50, 50), coordinate "c" (250, 150), designation resolution information "200dpi" and designataon color mode information "color" are sent from the scanner controlling section 47 to the designating section 44.

The designating section 44, after received coordinate "a", coordinate "c", designation resolution information and designation color mode information, stores these information temporarily; and judges whether or not there is designation read range of setting end in the setting storing section 43 (step S401). The designating section 44 judges that there is no designation read range of setting end (step S401).

On the basis of this judgment result, the designating section 44 designates range number of read order of the rectangular region 51-1 as "1" (step S402). Then, the designating section 44 makes the setting storing section 43 store the coordinate "a", the coordinate "c", the designation resolution information and the designation color mode information and correspond to designated range number "1" (step S402). In the setting storing section 43, coordinate item "a" (50, 50), coordinate item "c" (250, 150), designation resolution item "200dpi" and designation color mode item "color" that correspond to the range number "i" are respectively stored (Fig. 12A).

Continuously, the scanner controlling section 47 informs the host PC 12 of setting completion of the designation read range through the scanner communicating section 19 (step S403).

The host PC12, after informed of the setting completion from the scanner 41, nest, designates the rectangular region 51-2 (Fig. 11A) as a read range, and sends coordinate "a" (400, 200), coordinate "c" (450, 550), designation resolution information "300dpi" and designation color mode information "gray scale" to the scanner 41.

In the scanner 41, after the scanner communicating section 19 receives coordinate "a", coordinate "c", designation resolution information and designation color mode information that correspond to the rectangular region 51-2 from the host PC12 (step S301), the scanner controlling section 47 sends the coordinate "a", the coordinate "c", the designation resolution information and the designation color mode information that were received to the designating section 44.

The designating section 44 stores the coordinate "a", the coordinate "c", the designation resolution information and the designation color mode information that were received temporarily; and judges whether or not there is designation read range of setting end in the setting storing section 43 (step S401). Because the rectangular region 51-1 corresponding to range number "1" is setting end as designation read range in the setting storing section 43, the designating section 44 judges that there is designation read range of setting end (step S401).

Next, the designating section44 reads out designation read range number n of setting end (step S305). The designating section 44 reads out n=1 (step S305).

Continuously, the designating section 44 regards range number as "i=1" (step S306), compares the "i" with the designation read range number n of setting end in the setting storing section 43, and then judges whether or not i>n (step S307). Here, because i=n=1, the designating section 44 judges that it is not i>n (step S307).

Next, the designating section 44 reads out y-coordinate value yₐ₂ from coordinate "a" of the rectangular region 51-2; reads out y-coordinate value yₐ₁ from coordinate "a" of setting end corresponding to the range number "i=1"; compares yₐ₂ and yₐ₁; and then judges their magnitude (step S308). Here, because yₐ₂=200 and yₐ₁=50, the designating section 44 judges that yₐ₂>yₐ₁ (stepS308). On the basis of this, the designating section 44 judges that the read order of the rectangular region 51-2 ranks after the read order of the rectangular region 31-1 corresponding to range number "i=1".

Then, the designating section 44 adds 1 to range number "i=1", and the range number becomes "i=2" (step S311). At this time, because designation read range number of setting end is n=1, the designating section 44 judges i>n, that is, the designation read range number corresponding to the range number has not been set (step S307).

On the basis of this judgment, the designating section 44 designates range number of the rectangular region 51-2 as "i=2" to store coordinate "a" (400, 200), coordinate "c" (450,550), designation resolution information "300dpi" and designation color mode information "gray scale" of the rectangular region 31-2 in the storing section 43, and to correspond to range number "2" that is designated, as shown of Fig. 12A (step S405).

Continuously, the scanner controlling section 47 informs the host PC 12 of setting completion of designation read range through the scanner communicating section 19 (step S403).

The host PC 12, after informed of the setting completion from the scanner 41, continuously, designates the rectangular region 51-3 (Fig. 11A) as range number, and sends coordinate "a" (100, 100), coordinate "c" (350,300), designation resolution information "600dpi" and designation color mode information "monochrome" of the rectangular region 51-3 to the scanner 41.

In the scanner 41, after the scanner communicating section 19 receives the coordinate "a", the coordinate "c", the designation resolution information and the designation color mode anformation that correspond to the rectangular region 51-3 from the host PC 12(step S301), the scanner controlling section 47 sends the coordinate "a", the coordinate "c", the designation resolution information and the designation color mode information that were received to the designating section 44.

The designating section 44 temporarily stores the coordinate "a", the coordinate "c", the designation resolution information and the designation color mode information that were received; and judges whether or not there is designation read range of setting end in the setting storing section 43 (step S401). Because the rectangular region 51-1 corresponding to range number "1" and the rectangular region 51-2 corresponding to range number "2" are setting end as respectively designation read ranges in the setting storing section 43, the designating section 44 judges there is designation read range of setting end (step S401), and reads out designation read range number n=2 of setting end (step S305).

Continuously, the designating section 44 regards range number as "i=1" (step S306), but not i>n, that is, judges that the designation read range corresponding to the range number "i=1" has been set (step S307).

Next, the designating section 44 reads out y-coordinate value yₐ₃ from coordinate "a" of the rectangular region 51-3; reads out y-coordinate value yₐ₁ from coordinate "a" of setting end corresponding to the range number "i=1"; compares yₐ₃ and yₐ₁; and then judges their magnitude (step S308). Here, because yₐ₃=100 and yₐ₁=50, the designating section 44 judges that yₐ₃>yₐ₁ (stepS308). On the basis of this, the designating section 44 judges that the read order of the rectangular region 51-3 ranks after the read order of the rectangular region 31-1 corresponding to range number "i=1".

Next, the designating section 44 adds 1 to range number "i=1", and the range number becomes "i=2" (step S311). At this time, because read range number of setting end is n=2, the designating section 44 judges that it is not i>n, that is, the designation read range number corresponding to the range number "i=2" has not been set (step S307).

Continuously, the designating section 44 reads out y-coordinate value yₐ₂ from coordinate "a" of setting end corresponding to the range number "i=2"; compares yₐ₃ and yₐ₂; and then judges their magnitude (step S308). Here, because yₐ₃=100 and yₐ₂=200, the designating section 44 judges that yₐ₃<yₐ₂ (stepS308). On the basis of this, the designating section 44 judges that the read order of the rectangular region 51-3 ranks before the read order of the rectangular region 31-2 corresponding to range number "i=2".

On the basis of this judgment, the designating section 44 adds 1 to the range number "i=2", and changes the range number into "i=3" in order to rank t'e read order of designation read range which is set corresponding to range number "i=2" after the re ad order of rectangular region 51-3 in the setting storing section 43 (step S309).

Continuously, the designating section 44 designates range number of the rectangular region 51-3 as "i=2" to store coordinate "a" (100, 100), coordinate "c" (350,300), designation resolution information "600dpi" and designation color mode information "monochrome" of the rectangular region 51-3 in the storing section 43, and to correspond to range number "2" that is designated, as shown of Fig. 12B (step S405).

Continuously, the scanner controlling section 47 informs the host PC 12 of setting completion of designation read range through the scanner communicating section 19 (step S403).

After the host PC 12 is informed of setting completion from the scanner 41, when the selecting and inputting section 15 sends a read request, the read request will be sent to the scanner 41.

In the scanner 41, after the scanner communicating sectign 19 receives the read request from the host PC 12 (step S312), the scanner controlling section 47 completes setting process of designation read range in order to begin a reading process of each read range.

As stated above, the read order of each read range that was designated is designated in the host PC12; and the read condition that was designated as designation read range is set in the setting storing section 43.

Moreover, in step S308, after it is judged that it is not yₐₙ₊₁< yₐₙ, and when it is judged that yₐₙ₊₁= yₐₙ (step S406), the designating section 44 furthermore reads out the y-coordinate value y_{cn+1} from coordinate "c" that was received from the scanner controlling section 47; reads out the y-coordinate value y_{ci} from coordinate "c" corresponding to range number "i"; compares these; and then judges their magnitude (step S407). If it is y_{cn+1}>y_{ci}, the designating section 44 judges that the read order of read range n+1 ranks before the read order of designation read range of range number "i", and performs following process of step S309. If it is y_{cn+1≤}y_{ci}, the designating section 44 judges that the read order of read range n+1 ranks after the read order of designation read range of range number "i", and performs following process of step S311.

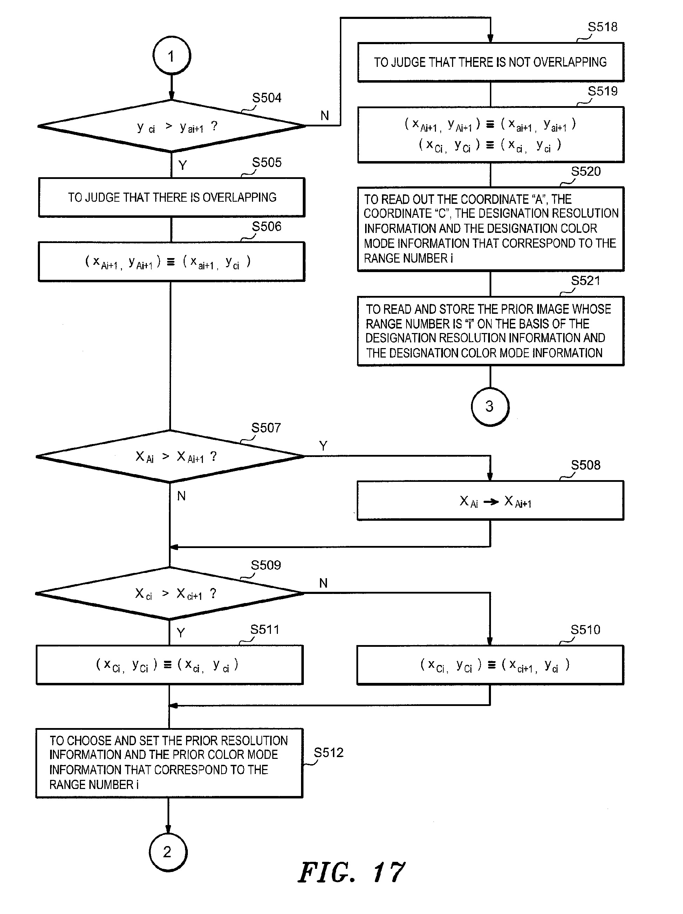

Next, it is to explain about the flow of reading process through the scanner 41 with respect to respective designation read ranges that are set by using Fig. 11A and Fig. 11B, Fig. 16 and Fig. 17 that are shown below.

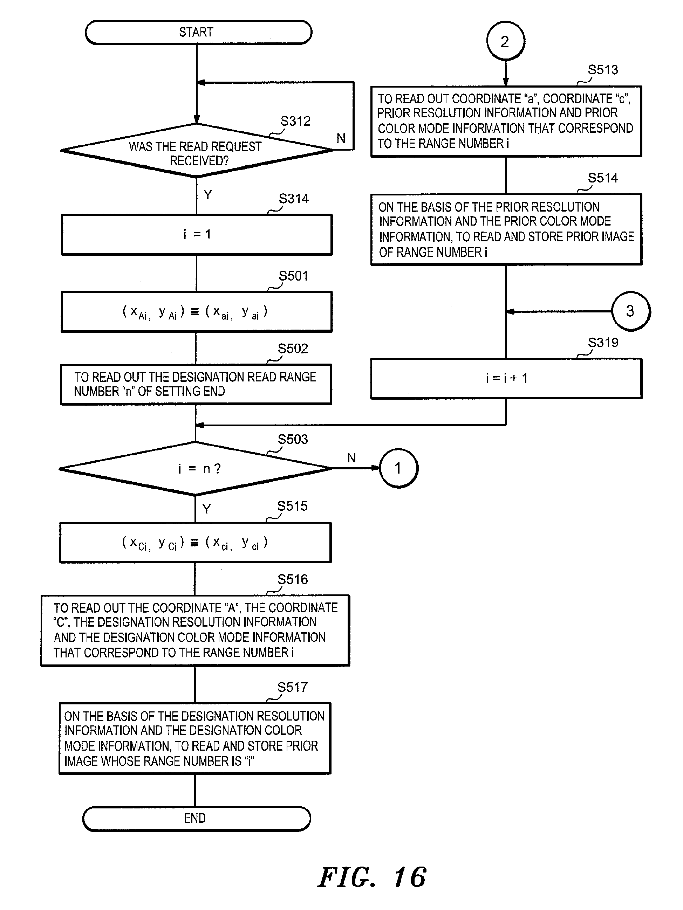

Fig. 16 is a first flow chart for explaining read operation in embodiment 2 of scanner of the present invention.

Here, it is to explain an example in the case that rectangular region 51-1, 51-3 and 51-2 (Fig. 11A) as designation read ranges with respect to the manuscript image 50 are respectively set to correspond to range number "1", "2" and "3" (Fig. 12B) in the setting storing section 43 as explained by using Fig. 14 and Fig. 15. Moreover, detailed explanation about the same process as embodiment 1 is omitted.

In the scanner 41, after the scanner communication section 19 receives the read request from the host PC 12 (step S312), the scanner controlling section 47, firstly, regards range number as i=1 (step S314). Then, the scanner controlling section 47 makes coordinate item "A" store coordinate "a" (xₐ₁, yₐ₁) = (50, 50) of setting end corresponding to i=1 as coordinate "A" (x_{A1}, y_{A1}) in the setting storing section 43 (step S501).

Continuously, the scanner controlling section 47 reads out designation read range number n of setting end from the setting storing section 43 (step S502). In the setting storing section (Fig. 12B), because three designation read ranges are setting end, so the scanner controlling section 47 reads out n=3(step S502).

Next, the scanner controlling section 47 compares range number "i" with the designation read range number n that are read out, and judges whether or not i=n in order to judge whether or not designation read ranges corresponding to range number "i" and range number "i+1" are set (step S503). Here, according to i=1 and n=3, it is judged that i≠n, that is, the corresponding designation read ranges are set (step S503).

Next, the scanner controlling section 47 informs the judging and selecting section 45 of the range number "i=1" in order to judge whether or not there is overlapping between designation read range of setting end corresponding to the range number "i=1", i.e. the rectangular region 51-1 (Fig. 11A) and designation read range of setting end corresponding to the range number "i=2", i.e. the rectangular region 51-3 (Fig. 11A) from the setting storing section 43 (Fig. 12B) in the auxiliary scan direction.

The judging and selecting section 45, after received the range number "i=1", from the setting storing section 43, reads out y-coordinate value y_{c1}=150 of coordinate "c" (x_{c1}, y_{c1})=(250, 150) corresponding to the range number "i=1"; reads out y-coordinate value yₐ₂=100 of coordinate "a" (xₐ₂, yₐ₂)=(100, 100) corresponding to the range number "i=2"; compares these; and judges their magnitude (step S504). Here, because y_{c1}> yₐ₂ (step S504), the judging and selecting section 45 judges that there is overlapping in the respective designation read ranges of range number "i=1" and range number "i=2" (step S505).

On the basis of this judgment result, the judging and selecting section 45 sets coordinate "A" corresponding to the range number "i=2" to (x_{c1}, y_{c1})=(250, 150) on the basis of the x-coordinate value xₐ₂=100 of coordinate "a" (xₐ₂, yₐ₂)=(100, 100) corresponding to the range number "i=2" and the y-coordinate value y_{c1}=150 of coordinate "c" (x_{c1}, y_{c1})=(250, 150) corresponding to the range number "i=1". Then, the judging and selecting section 45 makes coordinate item "A" corresponding to the range number "i=2" store the coordinate "A" (step S506).

Continuously, the judging and selecting section 45 reads out x-coordinate value x_{A1}=50 from coordinate "A" (x_{A1}, y_{A1})=(50, 50) corresponding to the range number "i=1"; reads out x-coordinate value x_{A2}=100 of coordinate "A" (x_{A2}, y_{c1})=(100, 150) corresponding to the range number "i=2"; compares these; and then judges their magnitude (step S507).

When it is judged that x_{A1}> x_{A2} (step S506), the judging and selecting section 45 changes the x-coordinate value x_{A1} of coordinate "A" corresponding to the range number "i=1" to the range number "i=1" into x-coordinate value x_{A2} of coordinate "A" corresponding to the range number "i=2" (step S508).

Here, because the judging and selecting section 45 judges that x_{A1}≤ x_{A2}(step S507), so the coordinate "A" of the range number "i=1" is not changed, but the judging and selecting section 45 moves operation of the next step.

The judging and selecting section 45 reads out x-coordinate value x_{c1}=250 from coordinate "c" (x_{c1}, y_{c1})=(250, 150) corresponding to the range number "i=1"; reads out x-coordinate value x_{c2}=350 from coordinate "c" (x_{c2}, y_{c2})=(250, 150) corresponding to the range number "i=2"; compares these; and then judges their magnitude (step S509).

When it is judged that x_{c1}< x_{c2} (step S509), the judging and selecting section 45 sets the coordinate "C" corresponding to the range number "i=1" to (xc2, yc1)=(350, 150) on the basis of the y-coordinate value of coordinate "c" corresponding to the range number "i=1" and the x-coordinate value of coordinate "c" corresponding to the range number "i=2". Then, the judging and selecting section 45 makes the coordinate item "C" corresponding to the range number "i=1" store the coordinate "C" (step S510).

Moreover, in step S509, when it is judged that xc1> xc2, the judging and selecting section 45 makes the corresponding coordinate item "C" store the coordinate "c" (xc1, y_{c1}) corresponding to the range number "i=1" as coordinate "C" (step S511).

When the coordinate "C" corresponding to the range number "i=1" is set, the judging and selecting section 45 reads out designation resolution information "200dpi" corresponding to the rang number "i=1" and designation resolution information "600dpi" corresponding to the range number "i=2" from the setting storing section 43, compares them, and then selects the "600dpi" as prior resolution information (step S512). The judging and selecting section 45 sets the prior resolution information "600dpi" to correspond to the range number "i=1" in the setting storing section 43 (step S512).

Further, the judging and selecting section 45 reads out designation color mode information "color" corresponding to the range number "i=1" and designation color mgde information "monochrome" corresponding to the range number "i=2" from the setting storing section 43, and compares them, and then selects the "color" as prior color mode information (step S512). The judging and selecting section 45 sets the prior color mode information "color" to correspond to the range number "i=1" in the setting storing section 43 (step S512).

When setting of the prior resolution information and the prior color mode information that correspond to the range number "i=1" are completed, the judging and setting section 45 informs the scanner controlling section 47 of setting completion with the range number "i=1".

The scanner controlling section 47, after received the information of setting completion from the judging and selecting section 45, reads out coordinate "A" (50, 50), coordinate "C" (350, 150), prior resolution information "600dpi" and prior color mode information "color" that correspond to the informed range number "i=1" from the setting storing section 43 (step S513).

Then, the scanner controlling section 47 informs the reading section 42 of the respective information that was read out, to execute reading process with respect to the prior read range corresponding to the range number i=1, i.e. the rectangular region 53-1(Fig. 11B). The reading section 42, firstly, when parallel moving in the auxiliary scan direction to the position of y-coordinate value y_{A1}=50 of coordinate "A" that is informed, reads the one line part of image from x-coordinate value x_{A1}=50 of coordinate "A" to x-coordinate value x_{C1}=350 of coordinate "C", and sends it to the image storing section 23 to store it. At this time, the reading section 42 reads the image in the interval of 600dpi (dot/inch) in the main scan direction in color mode. Further, the image storing section 23, while continuing to parallel move furthermore, reads one line part of image from x_{A1}=50 to x_{C1}=350 every advancing 1/600 inch in the auxiliary scan direction, and sends the image data to the image storing section 23 to store it. The reading section 42 repeats the reading process from the position of y-coordinate value y_{A1}=50 of coordinate "A" to the position of y-coordinate value y_{C1}=150 of coordinate "C". By this, the read of the image of the rectangular region 53-1 is completed, and image data of the image, i.e. prior image is stored in image storing section 23.

When the read is completed, the scanner controlling section 47, when adding 1 to the range number "i=1", and then the range number becomes "i=2" (step S319), compares the "i" with designation read range number n, judges whether or not i=n in order to judge whether or not designation read ranges corresponding to the range number "i" and the range number "i+1" have been set (step S503). Here, according to i=2 and n=3, it is judged that i≠n, that is, the corresponding designation read ranges have been set (step S503).

Next, the scanner controlling section 47 informs the judging and selecting section 45 of the range number "i=2" in order to judge whether or not there is overlapping between designation read range of setting end corresponding to the range number "i=2", i.e. the rectangular region 51-3 (Fig. 11A) and designation read range of setting end corresponding to the range number "i=2", i.e. the rectangular region 51-2 (Fig. 11A) from the setting storing section 43 (Fig. 12B).

The judging and selecting section 45 reads out y-coordinate value y_{c2}=300 of coordinate "c" (x_{c2}, y_{c2})=(350, 300) corresponding to the range number "i=2" and y-coordinate value yₐ₃=200 of coordinate "a" (xₐ₃, yₐ₃)=(400, 200) corresponding to the range number "i=3" from the setting storing section 43, and compares these, and judges their magnitude (step S504). Then, because y_{c2}> yₐ₃ (step S504), the judging and selecting section 45 judges that there is overlapping in the respective designation read ranges of range number "i=2" and range number "i=3" (step S505).

Continuously, the judging and selecting section 45 sets coordinate "A" corresponding to the range number "i=3" to (xₐ₃, y_{c2})=(400, 300) on the basis of the x-coordinate value xₐ₃=400 of coordinate "a" (xₐ₃, yₐ₃)=(400, 200) corresponding to the range number "i=3" and the y-coordinate value y_{c2}=300 of coordinate "c" (x_{c2}, y_{c2})=(350, 300) corresponding to the range number "i=2". Then, the judging and selecting section 45 makes coordinate item "A" corresponding to the range number "i=3" store the coordinate "A" (step S506).

Then, the judging and selecting section 45 reads out x-coordinate value xₐ₂=100 from coordinate "A" (x_{A2}, y_{A2})=(100, 150) corresponding to the range number "i=2" and x-coordinate value x_{A3}=100 of coordinate "A" (x_{A3}, y_{A3})=(400, 300) corresponding to the range number "i=3"; compares these; and then judges their magnitude (step S507).

When it is judged that x_{A2}≤x_{A3} (step S507), the judging and selecting section 45 reads out x-coordinate value x_{c2}=350 of coordinate "c" (x_{c2}, y_{c2})=(350, 300) corresponding to the range number "i=2" and x-coordinate value x_{c3}=100 of coordinate "c" (x_{c3}, y_{c3})=(450, 550) corresponding to the range number "i=3"; compares these; and then judges their magnitude (step S507).

When it is judged that x_{c2}<x_{c3} (step S509), the judging and selecting section 45 sets coordinate "C" corresponding to the range number "i=2" to (x_{c3}, y_{c2})=(450, 300) on the basis of the y-coordinate value y_{c2} of coordinate "c" corresponding to the range number "i=2" and the x-coordinate value x_{c3}=300 of coordinate "c" corresponding to the range number "i=3". Then, the judging and selecting section 45 makes coordinate item "C" corresponding to the range number "i=2" store the coordinate "C" (step S510).

When the coordinate "C" corresponding to the range number "i=2" is set, the judging and selecting section 45 reads out designation resolution information "600dpi" corresponding to the rang number "i=2" and designation resolution information "300dpi" corresponding to the range number "i=3" from the setting storing section 43, compares them, and then selects the "600dpi" as prior resolution information (step S512). The judging and selecting section 45 sets the prior resolution information "600dpi" to correspond to the range number "i=2" in the setting storing section 43 (step S512).

Further, the judging and selecting section 45 reads out designation color mode information "monochrome" corresponding to the range number "i=2" and designation color mode information "gray scale" corresponding to the range number "i=3" from the setting storing section 43, and compares them, and then selects the "gray scale" as prior color mode information (step S512). The judging and selecting section 45 sets the prior color mode information "gray scale" to correspond to the range number "i=2" in the setting storing section 43 (step S512).

When setting of the prior resolution information and the prior color mode information that correspond to the range number "i=2" are completed, the judging and setting section 45 informs the scanner controlling section 47 of setting completion with the range number "i=2".

The scanner controlling section 47, after received the information of setting completion from the judging and selecting section 45, reads out coordinate "A" (100, 150), coordinate "C" (450, 300), prior resolution information "600dpi" and prior color mode information "gray scale" that correspond to the informed range number "i=2" that is informed, from the setting storing section 43 (step S513).

Then, the scanner controlling section 47 informs the reading section 42 of the respective information that was read out, to execute reading process with respect to the prior read range corresponding to the range number "i=2", i.e. the rectangular region 53-2(Fig. 11B). Because y_{C1}= y_{A2}=150, the reading section 42 begins reading process with respect to prior read range corresponding to the range number "i=2" from the completion position of reading process with respect to prior read range corresponding to the range number "i=1". The reading section 42 reads the one line part of image from x-coordinate value x_{A2}=100 of coordinate "A" to x-coordinate value x_{C2}=450 of coordinate "C", and sends it to the image storing section 23 to store it. At this time, the reading section 42 reads the image in the interval of 600dpi (dot/inch) in the main scan direction in gray scale mode. The image storing section 23, while parallel moving in the auxiliary scan direction, reads one line part of image from x_{A2}=100 to x_{C2}=450 every advancing 1/600 inch, and sends the image data tg the image storing section 23 to store it corresponding to coordinate value. The reading section 42 repeats the reading process from the position of y-coordinate value y_{A2}=150 of coordinate "A" to the position of y-coordinate value y_{C2}=300 of coordinate "C". By this, the read of the prior image from the rectangular region 53-2 is completed (step S514).

When the read is completed, the scanner controlling section 47, when adding 1 to the range number "i=2", and then the range number becomes "i=3" (step S319), compares the "i" with designation read range number n, judges whether or not i=n in order to judge whether or not designation read ranges corresponding to the range number "i" and the range number "i+1" have been set (step S503). Here, according to i=3 and n=3, it is judged that i=n, that is, the designation read ranges corresponding to "i=4" have not been set (step S503).

By this, because it is unnecessary to judge that whether or not there is overlapping with the designation read range of the range number "i=4", the scanner controlling section 47 makes the coordinate item "C" store coordinate "c" (x_{c3}, y_{c3})=(450, 550) of setting end corresponding to the range number "i=3" as coordinate "C" (x_{C3}, y_{C3}) (step S515).

Then, the scanner controlling section 47 reads out coordinate "A" (400, 300), coordinate "C" (450, 550), designation resolution information "600dpi" and designation color mode information "gray scale" that correspond to the range number "i=3" from the setting storing section 43 (step S516). Then, the image is read and stored from prior read range corresponding to the range number "i=3", i.e. the rectangular region 51-3 on the basis of the designation resolution information and the designation color mode information. The reading section 42 reads the one line part of image from x-coordinate value x_{A3}=400 of coordinate "A" to x-coordinate value x_{C3}=450 of coordinate "C", and sends it to the image storing section 23 to store it. At this time, the reading section 42 reads the image in the interval of 300dpi (dot/inch) in the main scan direction in gray scale mode. The image storing section 23, while parallel moving in the auxiliary scan direction, reads one line part of image from x_{A3}=400 to x_{C3}=450 every advancing 1/300 inch, and sends the image data to the image storing section 23 to store it corresponding to coordinate value. The reading section 42 repeats the reading process from the position of y-coordinate value y_{A3}=300 of coordinate "A" to the position of y-coordinate value y_{C3}=550 of coordinate "C". By this, the read of the prior image from the rectangular region 53-3 is completed (step S517), and the reading process in the scanner 41 is completed.

As stated above, after it is judged that whether or not there is overlapping in the auxiliary scan direction of each designation read range, the prior read range is set, and the reading process of the prior image is executed.

Moreover, in step S504, when y_{ci}≤yₐᵢ₊₁, the judging and selecting section 45 judges that there is no overlapping in respective designation read ranges of the range number "i" and the range number "i+1" (step S518). Then, the judging and selecting 45 regards coordinate "a" (xₐᵢ₊₁, yₐᵢ₊₁) corresponding to range number "i+1" as coordinate "A", and makes the coordinate item "A" corresponding to range number "i+1" store it (step S519). Further, the judging and selecting 45 regards coordinate "c" (x_{ci}, y_{ci}) corresponding to range number "i" as coordinate "C", and makes the coordinate item "C" corresponding to range number "i" store it (step S519).

Then, the scanner controlling section 47 reads out coordinate "A", coordinate "C", designation resolution information and designation color mode information that correspond to range number "i" from the setting storing section 43 (step S520), and reads and stores the prior image from prior read range on the basis of the designation resolution information and the designation color mode information through the reading section 42 (step S521).

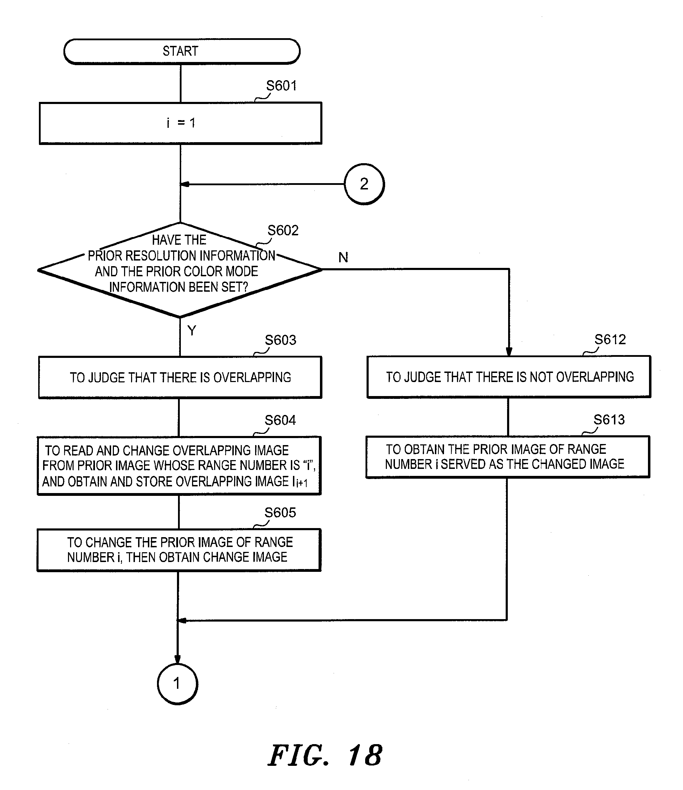

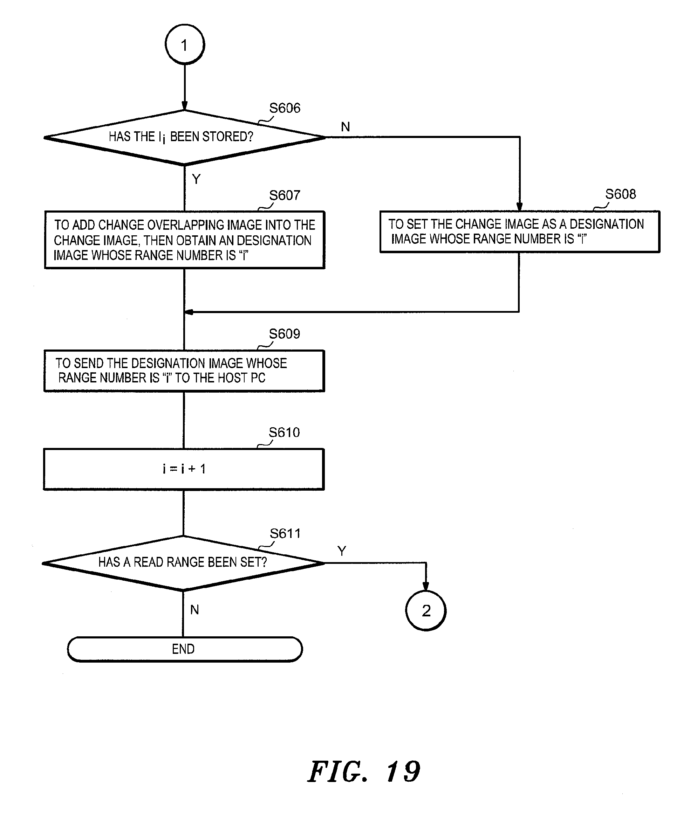

Next, it is to explain the flow of process that changes the image data, i.e. the prior image that read and obtained images of respective prior read ranges from the manuscript image 50 (Fig. 11B) into the image data, i.e. designation images corresponding to respective prior read ranges, and sends it to the host PC 12 in the scanner 41 by using Fig. 18 and Fig. 19.

Fig. 18 is a first flow chart for explaining change sending operation in embodiment 2 of scanner of the present invention; Fig. 19 is a second flow chart for explaining change sending operation in embodiment 2 of scanner of the present invention.

In the scanner 41, the scanner controlling section 47, firstly, regards the range number as "i=1" (step S601).

Continuously, the scanner controdling section 47 judges whether or not the prior resolution information and the prior color mode information that correspond to range number "1" are set in the setting storing section 43 (Fig. 12C) (step S602). When it is judged that they are set (step S602), the scanner controlling section 47 judges that there is overlapping between the designation read range of the range number "i=1" and the designation read range of the range number i=2 (step S603).

When it is judged that there is overlapping (step S603), the scanner controlling section 47, firstly, performs the following process in order to obtain the image data of overlapping part contained in the prior image from the prior range corresponding to the prior read range of the range number "i=1", i.e. the rectangular region 53-1(Fig. 11B).

The scanner controlling section 47 reads out coordinate "a" ( xₐ₂, yₐ₂ ) =(100, 100) corresponding to the range number "i=2" and coordinate "C"( x_{C1}, y_{C1} )=(350, 150) corresponding to the range number "i=1" from the setting storing section 43. Further, the scanner controlling section 47 reads out prior resolution information "600dpi" and prior color mode information "color" that correspond to the range number "i=1", and designation resolution information "600dpi" and designation color mode "monochrome" that correspond to range number "i=2" from the setting storing section 43. Then, the scanner controlling section 47 sends these coordinate "a" ( xₐ₂, yₐ₂ ), coordinate "C" ( x_{C1}, y_{C1} ), prior resolution information, prior color mode information, designation resolution information and designation color mode information to the changing section 46.

When the changing section 46, after received the coordinate "a" ( xₐ₂, yₐ₂ ), the coordinate "C" ( x_{C1}, y_{C1} ), the prior resolution information, the prior color mode information, the designation resolution information and the designation color mode information from the scanner controlling section 47, reads out the prior image corresponding to the range number "i=1" from the image storing section 23. Then, the coordinate region (x, y) that is designated by the coordinate "a"( xₐ₂, yₐ₂ )and the coordinate "C"( x_{C1}, y_{C1} ),that is, the image data of ( xₐ₂, yₐ₂ ) ≦ (x, y)≦ (x_{C1}, y_{C1} ) is read out from the prior image. The coordinate region corresponds to the rectangular region 57 (the region of oblique lines) on which the top point 51a-3 that is designated by the coordinate "a" ( xₐ₂, yₐ₂ ) and the top point 53C-1 that is designated by the coordinate "C" ( x_{C1}, y_{C1} )are respective regarded as top points in the manuscript image 50 shown in Fig. 11B. The image data is recorded as the image data of overlapping part, i.e. the overlapping part in respective designation read ranges of range number "i=1" and range number "i=2".

The overlapping image is composed of the obtained image data on the basis of the prior resolution information "600dpi" and the prior color mode information "color" that correspond to the range number "i=1" through the reading section 42. The changing section 46 changes the overlapping image into the image data, i.e. change overlapping image I₂ on the basis of the designation resolution information "600dpi" and the designation color mode information "monochrome" that correspond to the range number "i=2" (step S604). The changing section 46 changes the color image to the monochrome image, then obtains the change overlapping image I₂, and then sends the change overlapping image I₂ to the image storing section 23 to store it (step S604).

Continuously, the scanner controlling 47 reads out coordinate "A" ( x_{A1}, y_{A1} )=(50, 50), coordinate "c"( x_{c1}, y_{c1} )=(250, 150), designation resolution information "200dpi", designation color mode information "color", prior resolution information "600dpi" and prior color mode information "color" that correspond to the range number "i=1" from the setting storing section 43 (Fig. 12C), and then sends them to the changing section 46.

The changing section 46, after received the coordinate "A" ( x_{A1}, y_{A1} ), the coordinate "c" ( x_{c1}, y_{c1} ), the designation resolution information, the designation color mode information, the prior resolution information and the prior color mode information from the scanner controlling 47, reads out prior image corresponding to range number "i=1" from the image storing section 23. Then, the coordinate region (x, y) that is designated by the coordinate "A" ( x_{A1}, y_{A1} ) and the coordinate "c" ( x_{c1}, y_{c1} ), that is, the image data of ( x_{A1}, y_{A1} ) ≦ (x, y)≦ ( x_{c1}, y_{c1} ) is read out from the prior image. The coordinate region corresponds to the rectangular region 51-1 in the manuscript image 50 shown in Fig. 11A.

The changing section 46 changes the obtained prior image on the basis of the prior resolution information "600dpi" and the prior color mode information "color" that correspond to the range number "i=1" into the image data, i.e. the change image on the basis of the designation resolution information "200dpi" and the designation color mode information "color" that correspond to the range number "i=1" (step S605). The changing section 46 changes the obtained prior image in high resolution of "600dpi" into low resolution of "200dpi", and then obtains the change image (step S605).

Moreover, the change image is formed from the image data expect the image data of overlapping part, i.e. change overlapping image Iᵢ with the designation read range corresponding to range number "i-1" from the image data of the designation read range corresponding to the range number "i".

Next, the changing section 46 judges whether or not the change overlapping image I₁ corresponding to range number "i=1" is stored in the image storing setting 23 (step S606). When it is judged that the change overlapping image I₁ has not been stored (step S606), the changing section 46 sends the change image that is obtained in step S605 as image data of the designation read range, i.e. designation image corresponding to the range number "i=1" (step S608), to the scanner controlling section 47.

The scanner controlling section 47, after received the designation image corresponding to the range number "i=1" from the changing section 46, sends the designation image to the host PC 12 through the scanner communicating section 19 (step S609).

Continuously, the scanner controlling section 47 adds 1 to the range number "i=1", then the range number becgmes "i=2" (step S610). Then, the scanner controlling section 47 judges whether or not the read range corresponding to the range number "i=2" has been set (step S611).

When it is judged that the read range has been set (step S611), the scanner controlling section 47 judges whether or not the prior resolution information and the prior color mode information that correspond to the range number "i=2" are set in the setting storing section 43 (step S602). In the setting storing section 43 (Fig. 11C), because the prior resolution information and the prior color mode information that correspond to the range number "i=2" have been set, so the scanner controlling section 47 judges that there is overlapping in respective designation read ranges of the range number "i=2" and "i=3" (step S603).

Next, the scanner controlling section 47 reads out coordinate "a" ( xₐ₃, yₐ₃ )=(400, 200) corresponding to the range number "i=3" and coordinate "C" ( x_{C2}, y_{C2} ) =(450, 300) corresponding to the range number "i=2" from the setting storing section 43. Further, the scanner controlling section 47 reads out prior resolution information "600dpi" and prior color mode information "gray scale" that correspond to the range number "i=2", and designation resolution information "300dpi" and designation color mode "gray scale" that correspond to range number "i=3" from the setting storing section 43. Then, the scanner controlling section 47 sends these coordinate "a" ( xₐ₃, yₐ₃ ), coordinate "C"( x_{C2}, y_{C2} ), prior resolution information, prior color mode information, designation resolution information and designation color mode information to the changing section 46.

Then, the changing section 46 reads out the prior image corresponding to the range number "i=2" from the image storing section 23, and reads out the designation coordinate region (x, y) that is designated by the "a"( xₐ₃, yₐ₃ ), coordinate "C"( x_{C2}, y_{C2} ), that is, the image data of ( xₐ₃, yₐ₃ ) ≦ (x, y)≦ ( x_{C2}, y_{C2} ) as overlapping image from the prior image.

Continuously, the changing section 46 changes the overlapping image that was read out on the basis of the prior resolution information "600dpi" and the prior color mode information "gray scale", and obtains the change overlapping image I₃ on the basis of the designation resolution information "300dpi" and the designation color mode information "gray scale"(step S604). The obtained change overlapping image I₃ is sent to the image storing section 23 to store it (step S604).

Next, the scanner controlling 47 reads out coordinate "A" (x_{A2}, y_{A2} )=(100, 150), coordinate "c"( x_{c2}, y_{c2} )=(350, 300), designation resolution information "600dpi", designation color mode information "monochrome", prior resolution information "600dpi" and prior color mode information "gray scale" that correspond to the range number "i=2" from the setting storing section 43 (Fig. 12C) in order to obtain the designation image corresponding to the range number "i=2", and then sends them to the changing section 46.

The changing section 46 reads out the prior image corresponding to range number "i=2" from the image storing section 23, and reads out the coordinate region (x, y) that is designated by the coordinate "A" (x_{A2}, y_{A2} ) and the coordinate "c" ( x_{c2}, y_{c2}), that is, the image data of (x_{A2}, y_{A2} ) ≦ (x, y)≦ (x_{c2,} y_{c2} ) from the prior image.

Then, the changing section 46 changes the prior image that was obtained on the basis of the prior resolution information "600dpi" and the prior color mode information "gray scale", and obtains the change image on the basis of the designation resolution information "600dpi" and the designation color mode information "monochrome"(step S605).

Next, the changing section 46 judges whether or not the change overlapping image I₂ corresponding to range number "i=2" has been stored in the image storing section 23 (step S606). Because the change overlapping image I₂ that is received from the prior image corresponding to the range number "i=1" has been stored, the changing section 46 judges that the change overlapping image I₂ has been stored in the image storing section 23 (step S606), and reads out the change overlapping image I₂. Then, the changing section 46 adds the change overlapping image I₂ to the change image that is obtained in step S605, and obtains the designation image corresponding to the range number "i=2" (step S607). The changing section 46 sends the obtained designation image to the scanner controlling section 47.

The scanner controlling section 47, after received the designation image corresponding to the range number "i=2" from the changing section 46, sends the designation image to the host PC 12 through the scanner communicating section 19 (step S609).

Continuously, the scanner controlling section 47 adds 1 to the range number "i=2", and the range number becomes "i=3" (step S610). Then, the scanner controlling section 47 judges whether or not the read range corresponding to the range number "i=3" has been set (step S611).

When it is judged that the read range has been set (step S611), the scanner controlling section 47 judges whether or not the prior resolution information and the prior color mode information that correspond to the range number "i=3" have been set (step S602). In the setting storing section 43(Fig. 11C), because the prior resolution information and the prior color mode information that correspond to the range number "i=3" have not been set, the scanner controlling section 47 judges that there is no overlapping (step S612).

When it is judged that there is no overlapping, the scanner controlling section 47 reads out the prior image of the range number "i=3" from the image storing section 23, and obtains the prior image as change image corresponding to the range number "i=3" (step S613).

Next, the changing section 46 judges whether or not the change overlapping image I₃ corresponding to range number "i=3" has been stored in the image storing section 23 (step S606). Because the change overlapping image I₃ that is received from the prior image corresponding to the range number "i=2", has been stored in the image storing section 23, the c'anging section 46 judges that the change overlapping image I₃ has been stored (step S606), and reads out the change overlapping image I₃. Then, the changing section 46 adds the change overlapping image I₃ to the change image that is obtained in step S613, and obtains the designation image corresponding to the range number "i=3" (step S607). The changing section 46 sends the obtained designation image to the scanner controlling section 47.

The scanner controlling section 47, after received the designation image corresponding to the range number "i=3" from the changing section 46, sends the designation image to the host PC 12 through the scanner communicating section 19 (step S609).

Continuously, the scanner controlling section 47 adds 1 to the range number "i=3", and the range number becomes "i=4" (step S610). Then, when the scanner controlling section 47 judges that the read range corresponding to the range number "i=4" has not been set (step S611), the change sending process in the scafner 41 is completed.

As stated above, the image changing process is executed with respect to the prior image that is read from each prior read range, and the designation image corresponding to each designation read range is obtained and is sent to the host PC 12.

As stated above, in the scanner system 40 of this embodiment, when there is overlapping in the auxiliary scan direction, and different read conditions are set in plural read ranges that are designated in one manuscript image 50, the scanner 41 selects any of the read conditions on the basis of the prior order, and obtains the overlapping image on the basis of the read condition. Then, the scanner 41 becomes possible to respectively obtain images corresponding to respective read ranges, and to send them to the host PC 12, through changing on the basis of the respective read conditions that are designated. Therefore, even though the scan of the manuscript 13 is not repeated, but because it is possible to obtain the images of respective read ranges containing overlapping part corresponding to respective read conditions that are designated, it becomes possible to reduce read operation and to improve efficiency furthermore.

Moreover, in the present embodiment, the scanner 41, after obtained all the prior images, performs image change, and executes sending to the host PC 12 of respective designation images, but it also possible to execute the image change and to send the designation images that correspond to the obtaining of respective prior images.

Further, in the present embodiment, a changing section has been set for image changing process in the scanner 41 side, but it is also possible to set image changing function in the host PC 12 side. It is to explain about this in detail in the following embodiment 3.

### <Embodiment 3>

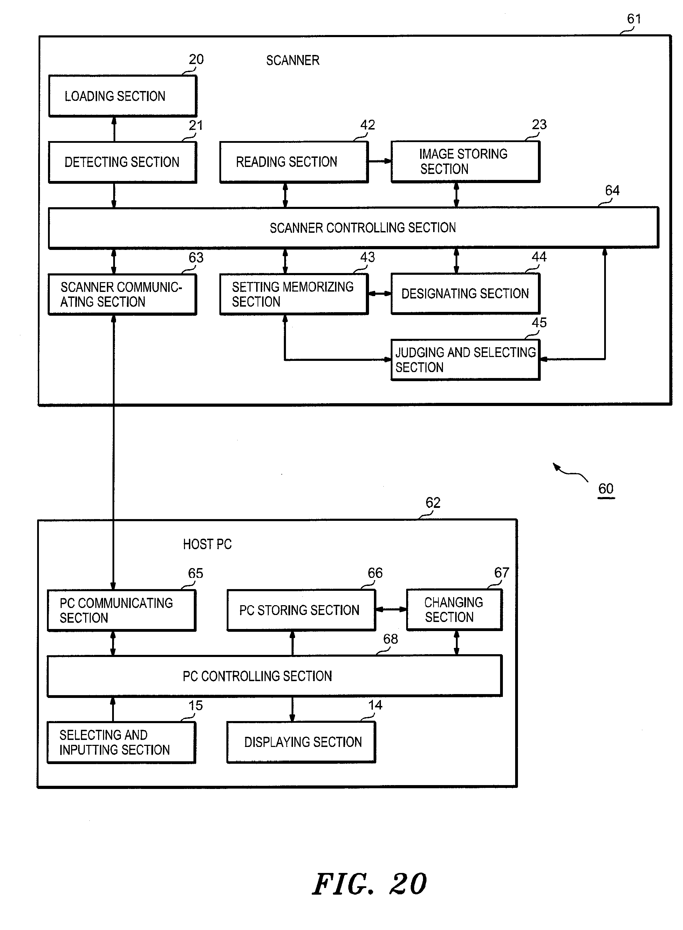

Fig. 20 is a block diagram showing a structure of a scanner system in embodiment 3 of the present invention.

The scanner 60 of the present embodiment is the structure that sets the changing section 67 in the host PC 62, but it is different from embodiment 1 and embodiment 2.

Moreover, in the present embodiment, the same structure as embodiment 1 or embodiment 2 is shown by the same mark, and the detailed explanation about these is omitted.

The scanner system 60, as shown by Fig. 20, comprises a scanner 61 as image reading apparatus and a host PC 62 as upper apparatus. The connection method between the scanner 61 and the host PC 62 is any of USB connection, parallel connection, network connection and the like.

The scanner 61, as shown by Fig. 20, comprises a scanner communicating section 63, a loading section 20, a detecting section 21, a reading section 42, an image storing section 23, a setting storing section 43, a designating section 44, a judging and selecting section 45 and a scanner controlling section 64.

The scanner communicating section 63 performs sending and receiving the data in the interval of the host PC 62 as a receiving section and a sending section. The scanner communicating section 63 receives the prior image, setting range information, designation condition information and prior condition information that are corresponded (stated later), and then sends them to the host PC 62.

The scanner controlling section 64 has a function of controlling each part of the scanner 61 as a controlling section. The scanner controlling section 64 reads out the prior images corresponding to respective range numbers i (i=1,2, ... n) from the image storing section 23; and reads out the setting range information, that is, coordinate "a" (xₐᵢ, yₐᵢ), coordinate "c" (x_{ci}, y_{ci}), coordinate "A" (x_{Ai}, y_{Ai}) and coordinate "C" (x_{Ci}, y_{Ci}), the designation condition information, that is, designation resolution information and designation color mode information, and the prior condition information, that is, prior resolution information and prior color mode information that correspond to the range number i from the image storing section 43; and then sends them to the scanner communicating section 63.

The host PC 62 is formed from personal computer (PC), as shown by Fig. 20, and comprises a displaying section 14, a selecting and inputting section 15, a PC communicating section 65, a PC storing section 66,a changing section 67 and a PC controlling section 68.

The PC communicating section 65 has a function of performing the sending and receiving of the data in the interval of the scanner 61 as a upper sending section and a upper receiving section. The PC communicating section 65 receives image data of the manuscript image, prior image, setting range information and designation condition information and the like from the scanner 61, and then sends them to the PC controlling section 68. Further, the PC communicating section 65 receives the coordinate "a", the coordinate "c", the designation resolution information and the designation color mode information that correspond to respective read ranges from the PC controlling section 68, and then sends them to the scanner 61.

The PC storing section 66 stores the image data, the setting range information and the designation condition information and the like that are received from the scanner 61 on the basis of the control of the PC controlling 68.

The changing section 67 changes the prior image that is read on the basis of the prior resolution information and the prior color mode information into change image on the basis of the designation resolution information and the designation color mode information.

The PC controlling section 68 performs control of each part in the host PC 62.

Continuously, it is to explain operation of the scanner system 60 of the present embodiment.

Because the flow (Fig. 6) of process pre-scanning the manuscript in the scanner 61 and the flow (Fig. 7) of process designating plural read ranges in the host PC 62 are the same as these in embodiment 1, so the explanation is omitted. Further, in the scanner 61, the flow (Fig. 14 and Fig. 15) of process setting respective designation read ranges is the same as it in embodiment 2, so the explanation is omitted.

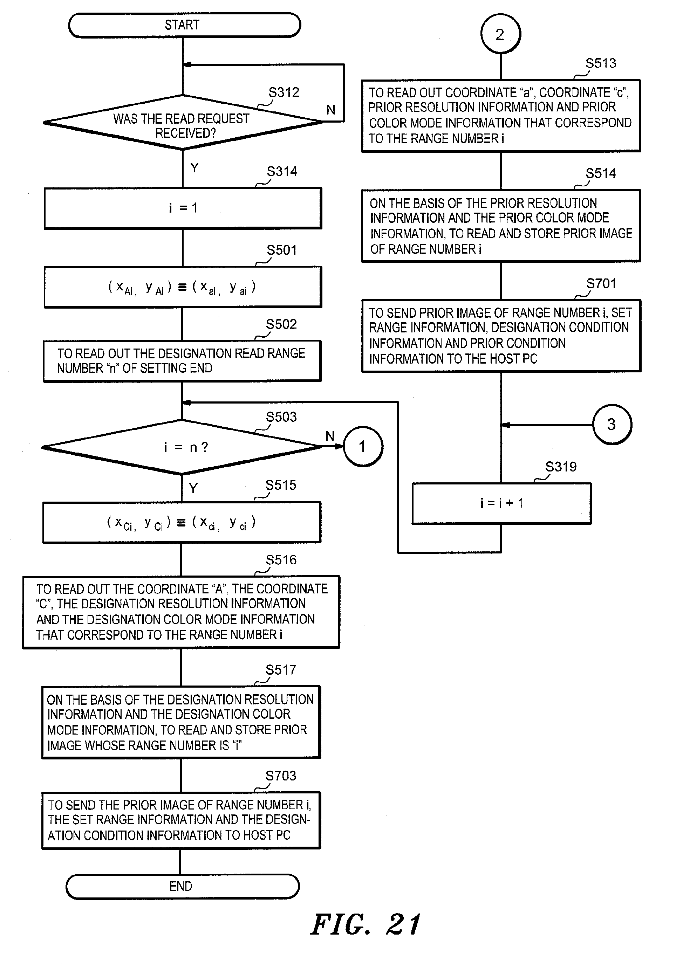

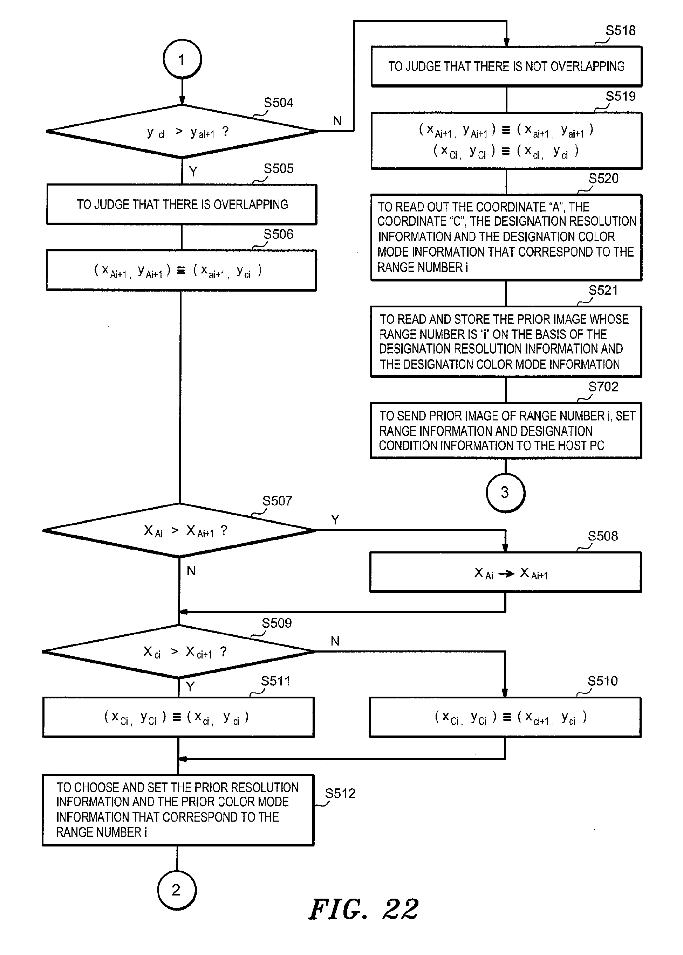

Here, it is to perform explanation about the flow of the process that reads the prior images from respective prior read ranges and that sends them to the host PC 12 by using Fig. 21 and Fig. 22.

Fig. 21 is a first flow chart for explaining read sending operation in embodiment 3 of scanner of the present invention; and Fig. 22 is a second flow chart for explaining read sending operation in embodiment 3 of scanner of the present invention.

Here, in host PC 62, an example is explained, that is, as designation read ranges with respect to manuscript image 50, rectangular regions 51-1, 51-2 and 51-3 (Fig. 11A) are designated in order. Moreover, in the embodiment, the detailed explanation about the same treatment as embodiment 1 and embodiment 2 is omitted.

In the scanner 61, when the scanner communicating section 63 receives the reading request from the host PC 62 and after the scanner controlling section 64 performs the setting of prior read range corresponding to a range number which is designated as i=1 (step S314); the scanner controlling section 64 controls the reading section to read the prior image of range number i=1 from the prior read range based on the prior resolution information and the prior color mode information and controls the image storing section 23 to store it (step S501-step S514).

Continuously, the scanner controlling section 64 reads the prior image of range number i=1 from the image storing section 23. Moreover, the scanner controlling section 64 reads the coordinate "a" (xₐᵢ, yₐᵢ), the coordinate "c" (x_{c1}, y_{c1}), the coordinate "A" (x_{A1}, y_{A1}) and the coordinate "C" (x_{C1}, y_{C1}) that correspond to the range number i=1 from the setting storing section 43, as setting range information corresponding to the range number. Further, the scanner controlling section 64 reads the designation resolution information and the designation color mode information that correspond to the range number i=1 from the setting storing section 43, as designation condition information corresponding to the range number. Furthermore, the scanner controlling section 64 reads the prior resolution information and the prior color mode information that correspond to the range number i=1 from the setting storing section 43, as the prior condition information. Then, the PC controlling section 64 sends the read prior image, the setting range information, the designation condition information and the prior condition information to host PC 62 by the scanner communicating section 63 (step S701).

In host PC 62, when the PC communicating section 65 receives the prior image, the setting range information, the designation condition information and the prior condition information, the PC controlling section 68 makes the PC storing section 66 store the respective data to correspond to the range number i=1.

Next, the PC controlling section 64 designates the range number as i=2 (step S319), and repeats the same process (step S503-step S514). And, the PC communicating section 63 sends the prior image, the setting range information, the designation condition information and the prior condition information, correspond to range number i=2 to the host PC 62 (step S701).

When the host PC 62 receives the prior image, the setting range information, the designation condition information and the prior condition information; makes the PC storing section 66 store the respective data to correspond to the range number i=2.

Continuously, the scanner controlling section 64, after performed a setting of the prior read range corresponding to the range number which is designated as i=3 (step S319), reads the prior image of range number i=3 from the prior read range based on the designation resolution information and designation color mode information by the reading section 42; and stores them in the image storing section 23 (step S503-step S521).

Then, the PC controlling section 64 reads the prior image of range number i=3 from the image storing section 23, and at the same time, reads the setting range information and the designation condition information that correspond to the range number i=3 from the setting storing section 43; and sends the prior image, the setting range information and the designation condition information to the host PC 62 by the scanner communicating section 63 (step S703). Thereby, the reading and sending process in scanner 61 is ended.

In the host PC 62, when the PC communicating section 65 receives the prior image, the setting range information and the designation condition information, the PC controlling section 68 makes the PC storing section 66 store the respective data to correspond to the range number i=3.

As stated above, after the prior image is read from each prior read range, the prior image is sent to host PC 62 together with the setting range information and the designation condition information.

Moreover, in step S518, when it is judged that there is no overlap in each designated reading range of range numbers "i" and "i+1", after the processes from step S519 to step S521 are executed, the scanner 61 reads the prior image and the setting range information and the designation condition information that correspond to the range number "i"; and sends them to host PC 62 (step S702).

When the host PC 62 receives the prior image, the setting range information and the designation condition information, the host PC 62 makes PC storing section 66 store these respective data to correspond to the range number "i".

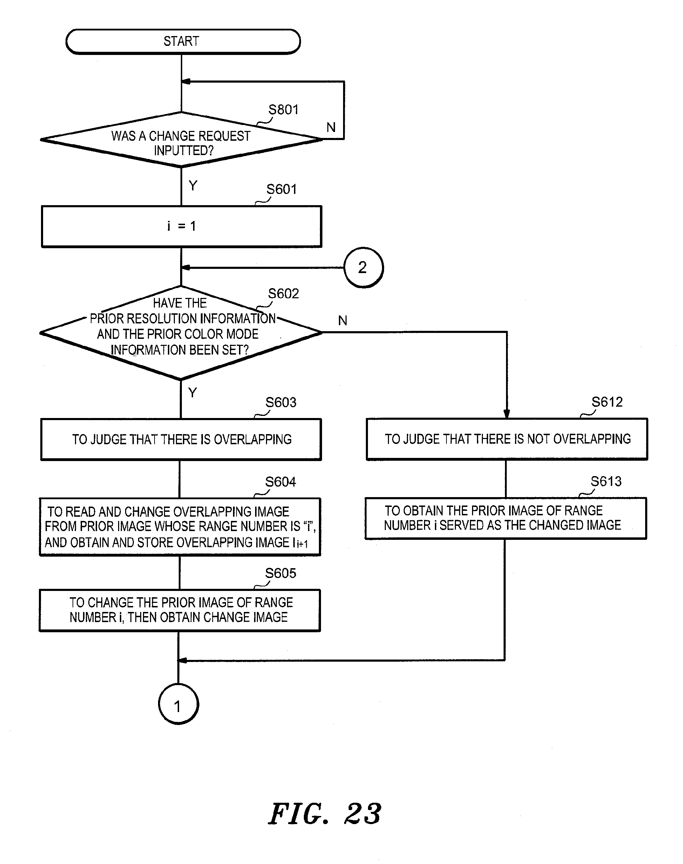

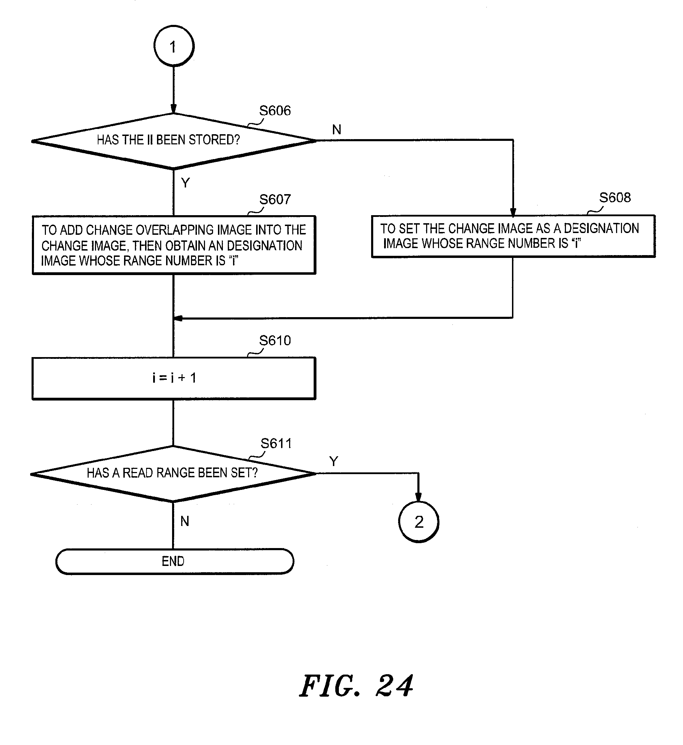

Next, in host PC 62, it is to explain a flow of process that changes the prior image received from scanner 61 into designation image by using Fig. 23 and Fig. 24.

Fig. 23 is a first flow chart for explaining change operation in embodiment 3 of scanner system of the present invention; and Fig. 24 is a second flow chart for explaining change operation in embodiment 3 of scanner system of the present invention.

In the host PC 62, when the selecting and inputting section 15 inputs a change request in order to request an execution of image change process (step S801), the PC controlling section 68 sets i=1 as the range number firstly (step S601).

Continuously, the PC controlling section 68 judges whether or not the prior condition information corresponding to the range number i, that is, prior resolution information and prior color mode information, is set in the PC storing section 66 (step S602). When it judges that it is set (step S602), the PC controlling section 68 judges that there is overlap in the designation reading ranges of the range number i=1 and range number i=2 (step S603).

When it judges that there is overlap (step S603), firstly, the changing section 46 reads the prior image, the coordinate "C" (x_{C1}, y_{C1}) and the prior condition information that correspond to the range number i=1, and the coordinate "a" (xₐ₂, yₐ₂) and the designation condition information that correspond to the range number i=2, from the PC storing section 66. Then, the changing section 46 reads the overlapping image based on the prior condition information from the prior image of range number i=1 on the basis of the coordinate "a" of the range number i=1 and the coordinate "c" of the range number i=2; changes the overlapping image into change overlapping image I₂ based on the designation condition information; and makes the change overlapping image I₂ be stored in the PC storing section 66 (step S604).

Continuously, the changing section 67 changes the prior image of the range number i=1 on the basis of the coordinate "A" (x_{A1}, y_{A1}) and the coordinate "C" (x_{c1}, y_{c1}), the designation condition information and the prior condition information that correspond to the range number i=1; and then obtains a change image (step S605); when the change overlapping image I₁ is judged that it is not stored in the PC storing section 66 (step S606), makes the PC storing section 66 store the change image as designation image corresponding to the range number i=1 (step S608).

When the designation image corresponding to the range number "i" is obtained, the PC controlling section 68 adds 1 to the range number i, and then it becomes i=i+1 (step S610). Then, on the basis of a judgment to judge whether or not respective data corresponding to the range number are stored in the PC storing section 66, the PC controlling section 68 judges whether or not the corresponding read range is set (step S611); and when judged that it is set, obtains the designation image corresponding to the range number (step S602-step S608). When it judges that it is not set (step S611), the host PC 62 ends the change process.

As stated above, in the host PC 62, with respect to the prior image that is received from the scanner 61, the image change process toward designation image is executed.

As stated above, in the scanner system 60 of this embodiment, the changing section 67 is furnished in the host PC 62 for the image change process. In the host PC 62, the image change process from the prior image to the designation image is executed. As a result, because the image change function is unnecessary in the scanner 61, so it is possible to inhibit cost of scanner.

### The utilization possibility on industry:

As explained by the embodiments above, the present invention is applied to scanner. However, the present invention is not limited to this example, that is, is also possible to be applied to MFP.

Moreover, in the scanner 41 of the embodiment 2, it may be also possible to set a judging function to judge whether or not there is image change function in the host PC; and only in the case that there is no the image change function, to perform a control in order to perform the image change process executed by the changing section 46. As a result, improvement with further efficiency becomes possible.

The present invention is not limited to the foregoing embodiments but many modifications and variations are possible within the spirit and scope of the appended claims of the invention.

## Claims

1. An image reading apparatus for reading an image from medium, comprising:
an inputting section that inputs respective range information for designating plural read ranges with respect to the medium, and inputs designation condition information for designating read conditions corresponding to respective read ranges;
a storing section that stores the input range information and the input designation condition information;
a reading section that reads image of the read range from the medium on the basis of the range information and the designation condition information, while physically moving position of itself with respect to the medium; and
a controlling section that reads out the range information and the designation condition information that correspond to respective read ranges from the storing section, instructs the reading section to physically move position with respect to the medium, sets the reading section on the basis of position information with respect to the medium about the reading section, the range information and the designation condition information, and executes a read of image of the read range.

2. The image reading apparatus according to claim 1,
wherein the image reading apparatus inputting section is connected with an upper apparatus, and
the inputting section is formed from a receiving section which receives the range information and the designation condition information from the upper apparatus.

3. The image reading apparatus according claim 1, further comprising:
an outputting section that outputs the read image of the respective read ranges.

4. The image reading apparatus according to claim 1, further comprising:
a judging section that judges whether or not there is overlapping at least in two read ranges of the plural read ranges, on the basis of the respective range information; and
a selecting section that, when it is judged that there is overlapping, respectively reads out designation condition information corresponding to respective read ranges containing the overlapping part from the storing section, and selects one of the read respective designation condition information as prior condition information,
wherein the controlling section reads image of read range from the respective read ranges except the overlapping part, as non-overlapping image; and reads image of the overlapping part as overlapping image on the basis of the selected prior condition information.

5. The image reading apparatus according to claim 4, further comprising:
a changing section that changes the overlapping image, which is read on the basis of the prior condition information into change overlapping image on the basis of different designation condition information; and
an outputting section that outputs image of the respective read ranges that are read,
wherein the controlling section controls the changing section to change the overlapping image into respective change overlapping image on the basis of designation condition information corresponding to the respective read ranges,
the outputting section outputs the non-overlapping image read from the respective read ranges and the change overlapping image.

6. An image reading apparatus according to claim 3 or 5,
wherein the image reading apparatus is connected with an upper apparatus,
the outputting section is formed from a sending section which sends image of respective read ranges to the upper apparatus.

7. An image reading system, comprising:
an upper apparatus; and
an image reading apparatus which is connected with the upper apparatus and is used for reading image from medium,
wherein the upper apparatus includes:
an inputting section that inputs respective range information for designating plural read ranges with respect to the medium, and inputs designation condition information for designating read conditions corresponding to respective read ranges; and
an upper sending section that sends the range information and the designation condition information that are input to the image reading apparatus,
wherein the image reading apparatus includes:
a receiving section that receives the range information and the designation condition information from the upper apparatus;
a storing section that stores the received range information and the received designation condition information;
a reading section that reads image of the read range from the medium on the basis of the range information and the designation condition information, while physically moving position of itself with respect to the medium; and
a controlling section that reads out the range information and the designation condition information that correspond to respective read ranges from the storing section, instructs the reading section to physically move position with respect to the medium, sets the reading section of the basis of position information with respect to the medium about the reading section, the range information and the designation condition information, and executes a read of image of the read range.

8. An image reading apparatus according to claim 1 or an image reading system according to claim 7,
wherein the image reading apparatus further includes:
a designating section that designates a read order of the plural read ranges on the basis of the respective range information,
wherein the storing section stores the read order corresponding to the input range information and the input designation condition information, and
the controlling section controls the reading section to read the range information and the designation condition information that correspond to the read order.

9. An image reading apparatus according to claim 1 or an image reading system according to claim 7,
wherein the designation condition information contains designation resolution information representing a resolution.

10. An image reading apparatus according to claim 1 or an image reading system according to claim 7,
wherein the designation condition information contains designation color mode information that represents one of color, gray scale and monochrome.

11. An image reading apparatus according to claim 1 or an image reading system according to claim 7,
wherein the range information is formed from rectangular coordinate value, and the designating section performs a designation of the read order on the basis of the rectangular coordinate value.

12. The image reading system according to claim 7,
wherein the image reading apparatus further includes a sending section that sends image of the respective read ranges to the upper apparatus,
the upper apparatus further includes an upper receiving section that receives image of the respective read ranges from the image reading apparatus.

13. The image reading system according to claim 7,
wherein the image reading apparatus further includes:
a judging section that judges whether or not there is overlapping at least in two read ranges of the plural read ranges, on the basis of the respective range information; and
a selecting section that, when it is judged that there is overlapping, respectively reads out designation condition information corresponding to respective read ranges containing the overlapping part from the storing section, and selects one of the read respective designation condition information as prior condition information,
wherein the controlling section reads image of read range from the respective read ranges except the overlapping part, as non-overlapping image; and reads image of the overlapping part as overlapping image on the basis of the selected prior condition information.

14. An image reading apparatus according to claim 4 or an image reading system according to claim 13,
wherein each designation condition information contains designation resolution information representing resolution,
the selecting section selects the biggest designation resolution information in the respective designation resolution information as a prior resolution information,
the controlling section reads the overlapping image on the basis of the selected prior resolution information.

15. An image reading apparatus according to claim 4 or an image reading system according to claim 13,
wherein the designation condition information contains color mode information representing one of color, gray scale and monochrome,
the selecting section selects one of the respective designation color modes on the basis of a predetermined priority order as prior color mode information,
the controlling section reads the overlapping image on the basis of the selected prior color mode information.

16. The image reading system according to claim 13,
wherein the image reading apparatus further includes:
a changing section that changes the overlapping image, which is read on the basis of the prior condition information into change overlapping image on the basis of different designation condition information; and
a sending section that sends image of the respective read ranges that are read to the upper apparatus,
wherein the controlling section controls the changing section to change the overlapping image into respective change overlapping image on the basis of desigfation condition information corresponding to the respective read ranges,
the sending section sends the non-overlapping image read from the respective read ranges and the change overlapping image.

17. The image reading system according to claim 16,
wherein the upper apparatus further includes an upper receiving section that receives the non-overlapping image and the change overlapping image from the image reading apparatus.

18. The image reading system according to claim 13,
wherein the image reading apparatus further includes a sending section that sends the non-overlapping image and the overlapping image that are read from the respective read ranges, to the upper apparatus,
the upper apparatus further includes a receiving section that receives the non-overlapping image and the overlapping image from the image reading apparatus; and a changing section that changes the overlapping image into the respective change overlapping images on the basis of designation condition information corresponding to the respective read ranges.
